(19) Europäisches Patentamt
European Patent Office
Office européen des brevets

(11) **EP 2 520 391 B1**

(12) **EUROPÄISCHE PATENTSCHRIFT**

(45) Veröffentlichungstag und Bekanntmachung des Hinweises auf die Patenterteilung:
**24.01.2018 Patentblatt 2018/04**

(51) Int Cl.:
*B23F 5/16* *(2006.01)* *B23F 21/10* *(2006.01)*
*B23F 21/12* *(2006.01)*

(21) Anmeldenummer: **11167703.5**

(22) Anmeldetag: **26.05.2011**

(54) **Verfahren zum Wälzschälen**

Method for skiving

Procédé de taillage de cylindres

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.05.2011 DE 202011050054 U**

(43) Veröffentlichungstag der Anmeldung:
**07.11.2012 Patentblatt 2012/45**

(73) Patentinhaber: **Klingelnberg AG**
**8050 Zürich (CH)**

(72) Erfinder: **Vogel, Olaf, Dr.**
**76275 Ettlingen (DE)**

(74) Vertreter: **Heusch, Christian et al**
**Ant-IP GmbH**
**Kirchplatz 2**
**82387 Antdorf (DE)**

(56) Entgegenhaltungen:
**DE-A1- 4 132 487      DE-A1-102009 003 601**
**DE-A1-102009 025 945    DE-C1- 4 122 460**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 520 391 B1

**Beschreibung**

Gebiet der Erfindung

Gegenstand der Erfindung ist ein Verfahren zum Wälzschälen einer Verzahnung oder einer anderen periodischen Struktur.

Hintergrund der Erfindung, Stand der Technik

Es gibt zahlreiche Verfahren zur Fertigung von Zahnrädern. Bei der spanenden Weichvorbearbeitung unterscheidet man Wälzfräsen (im Englischen hobbing genannt), Wälzstossen (im Englischen gear shaping genannt), Wälzhobeln (im Englischen generating planing genannt) und Wälzschälen (im Englischen power skiving genannt). Das Wälzfräsen und Wälzschälen sind sogenannte kontinuierliche Verfahren, wie im Folgenden näher erläutert wird.

Bei der spanenden Herstellung von Zahnrädern unterscheidet man zwischen dem Einzelteilverfahren (auch intermittierendes Teilverfahren und im Englischen intermitted indexing process oder single indexing process genannt) und dem kontinuierlichen Verfahren, das teilweise auch als kontinuierliches Teilungsverfahren (im Englischen continuous indexing process, oder face hobbing genannt) bezeichnet wird.

Beim kontinuierlichen Verfahren kommt beispielsweise ein Werkzeug mit entsprechenden Messern zum Einsatz, um die Flanken eines Werkstücks zu schneiden. Das Werkstück wird in einer Aufspannung kontinuierlich, d.h. im pausenlosen Verfahren fertig geschnitten. Das kontinuierliche Verfahren basiert auf komplexen, gekoppelten Bewegungsabläufen, bei denen das Werkzeug und das zu bearbeitende Werkstück relativ zueinander eine kontinuierliche Teilungsbewegung ausführen. Die Teilungsbewegung ergibt sich aus dem koordinierten, respektive gekoppelten Antreiben mehrerer Achsantriebe einer entsprechenden Maschine.

Beim Einzelteilverfahren wird eine Zahnlücke bearbeitet, dann erfolgen zum Beispiel eine relative Bewegung des Werkzeugs und eine sogenannte Teilungsbewegung (Teilungsdrehung), bei der sich das Werkstück relativ zum Werkzeug dreht, bevor dann die nächste Zahnlücke bearbeitet wird. Es wird so Schritt für Schritt ein Zahnrad gefertigt.

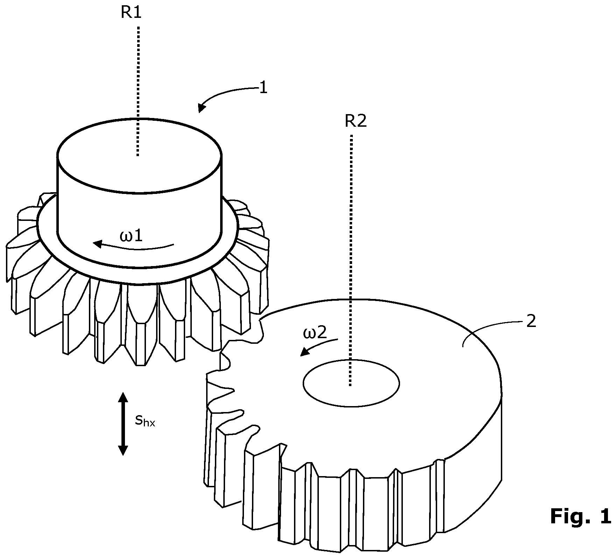

Das eingangs genannte Wälzstossverfahren kann durch ein Zylinderradgetriebe beschrieben oder dargestellt werden, da der Kreuzungswinkel (auch Achskreuzwinkel genannt) zwischen der Rotationsachse R1 des Stosswerkzeugs 1 und der Rotationsachse R2 des Werkstücks 2 Null Grad beträgt, wie in Fig. 1 schematisch dargestellt. Die beiden Rotationsachsen R1 und R2 verlaufen parallel, wenn der Achskreuzwinkel Null Grad beträgt. Das Werkstück 2 und das Stosswerkzeug 1 drehen sich kontinuierlich um ihre Rotationsachsen R2, bzw. R1. Das Stosswerkzeug 1 macht zusätzlich zu der Drehbewegung eine Hubbewegung, die in Fig. 1 durch den Doppelpfeil $s_{hx}$ bezeichnet ist, und nimmt bei dieser Hubbewegung Späne vom Werkstück 2 ab.

Vor einiger Zeit wurde ein Verfahren erneut aufgegriffen, das als Wälzschälen bezeichnet wird. Die Grundlagen sind circa 100 Jahre alt. Eine erste Patentanmeldung mit der Nummer DE 243514 zu diesem Thema geht auf das Jahr 1912 zurück. Nach den ursprünglichen Überlegungen und Untersuchungen der Anfangsjahre wurde das Wälzschälen nicht mehr ernsthaft weiter verfolgt. Es waren bisher aufwendige Prozesse, die teilweise empirisch waren, notwendig, um eine geeignete Werkzeuggeometrie für das Wälzschälverfahren zu finden.

Ungefähr Mitte der 1980er Jahre wurde das Wälzschälen erneut aufgegriffen. Erst mit den heutigen Simulationsverfahren und den modernen CNC-Steuerungen der Maschinen, konnte das Prinzip des Wälzschälens in ein produktives, reproduzierbares und robustes Verfahren umgesetzt werden. Hinzu kommen die hohe Verschleißfestigkeit heutiger Werkzeugmaterialien, die enorm hohe statische und dynamische Steifigkeit und die hohe Güte des Synchronlaufs der modernen Maschinen.

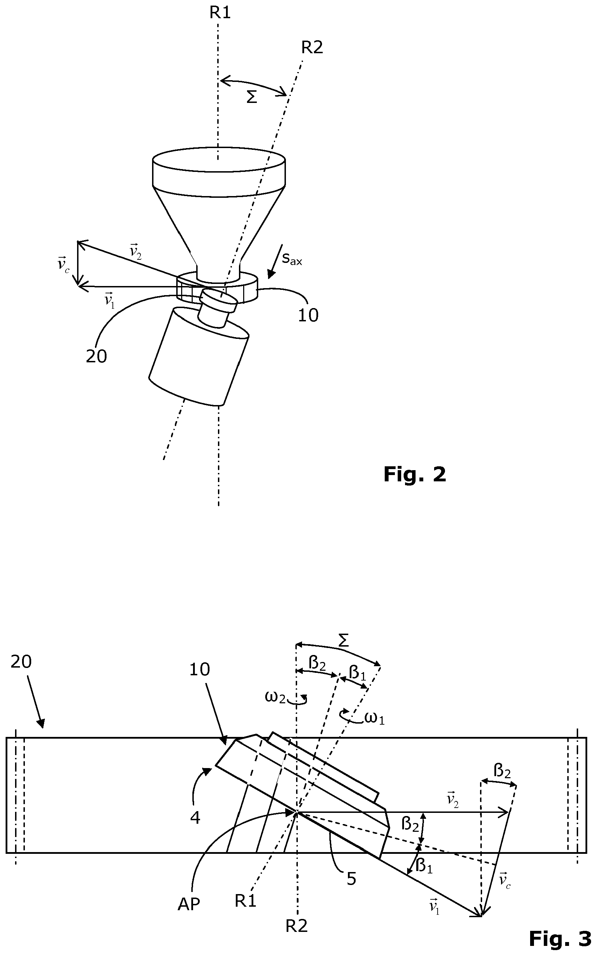

Beim Wälzschälen wird nun, wie in Fig. 2 gezeigt, ein Achskreuzwinkel Σ zwischen der Rotationsachse R1 des Wälzschälzeugs 10 (auch als Schälrad bezeichnet) und der Rotationsachse R2 des Werkstücks 20 vorgegeben, der ungleich Null ist. Die resultierende Relativbewegung zwischen dem Wälzschälwerkzeug 10 und dem Werkstück 20 ist eine Schraubbewegung, die in einen Drehanteil (rotatorischer Anteil) und einen Schubanteil (translatorischer Anteil) zerlegt werden kann. Als antriebstechnisches Analogon kann ein Wälzschraubgetriebe betrachtet werden, wobei der Drehanteil dem Wälzen und der Schubanteil dem Gleiten der Flanken entspricht. Um so größer der Achskreuzwinkel Σ betragsmäßig ist, um so mehr nimmt der für die Bearbeitung des Werkstücks 20 notwendige translatorische Bewegungsanteil zu. Er bewirkt nämlich eine Bewegungskomponente der Schneiden des Wälzschälwerkzeugs 10 in Richtung der Zahnflanken des Werkstücks 20. Beim Wälzschälen wird somit der Gleitanteil der kämmenden Relativbewegung der im Eingriff stehenden Zahnräder des Schraubradersatzgetriebes ausgenutzt, um die Schnittbewegung auszuführen. Beim Wälzschälen ist nur ein langsamer Axialvorschub (auch axialer Vorschub genannt) erforderlich und es entfällt die sogenannte Stossbewegung, die für das Wälzstossen typisch ist. Beim Wälzschälen tritt somit auch keine Rückhubbewegung auf.

Die Schnittgeschwindigkeit beim Wälzschälen wird direkt von der Drehzahl des Wälzschälwerkzeugs 10 bzw. des Werkstücks 20 und von dem verwendeten Achskreuzwinkel Σ der Rotationsachsen R1 und R2 beeinflusst. Der

Achskreuzwinkel $\Sigma$ und damit der Gleitanteil sollte so gewählt werden, dass für die Bearbeitung des Materials bei gegebener Drehzahl eine optimale Schnittgeschwindigkeit erzielt wird.

Die Bewegungsabläufe und weitere Details eines vorbekannten Wälzschälverfahrens sind der bereits erwähnten schematischen Darstellung in Fig. 2 zu entnehmen. Fig. 2 zeigt das Wälzschälen einer Außenverzahnung an einem zylindrischen Werkstück 20. Das Werkstück 20 und das Werkzeug 10 (hier ein zylindrisches Wälzschälwerkzeug 10) rotieren in entgegengesetzter Richtung.

Hinzu kommen weitere Relativbewegungen. Es ist ein Axialvorschub $s_{ax}$ erforderlich, um die gesamte Verzahnbreite des Werkstücks 20 mit dem Werkzeug 10 bearbeiten zu können. Falls am Werkstück 20 eine Schrägverzahnung erwünscht ist (d.h. $\beta_2 \neq 0$), wird dem Axialvorschub $s_{ax}$ ein Differentialvorschub $s_D$ überlagert. Ein Radialvorschub $s_{rad}$ kann als Zustellbewegung ausgeführt werden. Der Radialvorschub $s_{rad}$ kann auch eingesetzt werden, um beispielsweise die Balligkeit der Verzahnung des Werkstücks 20 zu beeinflussen.

Beim Wälzschälen ergibt sich der Vektor der Schnittgeschwindigkeit $\vec{v}_c$ im Wesentlichen als Differenz der beiden um den Achskreuzwinkel $\Sigma$ zueinander geneigten Geschwindigkeitsvektoren $\vec{v}_1$ und $\vec{v}_2$ der Rotationsachsen R1, R2 von Werkzeug 10 und Werkstück 20. $\vec{v}_1$ ist der Geschwindigkeitsvektor am Umfang des Werkzeugs 10 und $\vec{v}_2$ ist der Geschwindigkeitsvektor am Umfang des Werkstücks 20. Die Schnittgeschwindigkeit $v_c$ des Wälzschälprozesses kann also durch den Achskreuzwinkel $\Sigma$ und die Drehzahl im Schraubradersatzgetriebe verändert werden. Der Axialvorschub $s_{ax}$ hat nur einen kleinen Einfluss auf die Schnittgeschwindigkeit $v_c$, welcher vernachlässigt werden kann und deshalb in dem Vektordiagramm mit den Vektoren $\vec{v}_1$, $\vec{v}_2$ und $\vec{v}_c$ in Fig. 2 nicht gezeigt ist.

In Fig. 3 ist das Wälzschälen einer Außenverzahnung eines Werkstücks 20 mit einem konischen Wälzwerkzeug 10 gezeigt. In Fig. 3 sind wiederum der Achskreuzwinkel $\Sigma$, der Vektor der Schnittgeschwindigkeit $\vec{v}_c$, die Geschwindigkeitsvektoren $\vec{v}_1$ am Umfang des Werkzeugs 10 und $\vec{v}_2$ am Umfang des Werkstücks 20, sowie der Schrägungswinkels $\beta_1$ des Werkzeugs 10 und der Schrägungswinkel $\beta_2$ des Werkstücks 20 gezeigt. Anders als in Fig. 2 ist der Schrägungswinkel $\beta_2$ hier ungleich Null. Der Zahnkopf des Werkzeugs 10 ist in Fig. 3 mit dem Bezugszeichen 4 gekennzeichnet. Die Zahnbrust ist in Fig. 3 mit dem Bezugszeichen 5 gekennzeichnet. Die beiden Rotationsachsen R1 und R2 schneiden sich nicht, sondern sind windschief zueinander angeordnet. Bei einem konischen Wälzwerkzeug 10 wird der Auslegungspunkt AP bisher üblicherweise auf dem Gemeinlot der beiden Rotationsachsen R1 und R2 gewählt, da ein Ankippen des Wälzschälwerkzeugs 10 zur Beschaffung von Freiwinkeln nicht notwendig ist. Der Auslegungspunkt AP fällt hier mit dem sogenannten Berührpunkt zusammen. In diesem Auslegungspunkt AP berühren sich die Wälzkreise des Schraubwälzersatzgetriebes.

Um die Produktivität des Wälzschälens - etwa beim Einsatz moderner Schneidmaterialien wie Hartmetallen zur Trockenbearbeitung - möglichst groß zu machen, muss der Gleitanteil der Relativbewegung zwischen Wälzschälwerkzeug und Werkstück ausreichend hohe Schnittgeschwindigkeiten erzeugen. Die Schnittgeschwindigkeit $v_c$ wird beim Wälzschälen direkt durch die Rotationsgeschwindigkeit des Schraubradersatzgetriebes, durch die wirksamen Werkstück- bzw. Werkzeugradien und den Achskreuzwinkel $\Sigma$ der Rotationsachsen R1 und R2 beeinflusst. Die mögliche Rotationsgeschwindigkeit ist hierbei durch die erlaubten Drehzahlen der verwendeten Bearbeitungsmaschine (Wälzschälmaschine) beschränkt. Die Werkstückgröße ist fest vorgegeben. Die mögliche Werkzeuggröße ist durch den Arbeitsraum der verwendeten Bearbeitungsmaschine (Wälzschälmaschine) und bei Innenverzahnungen auch durch den Innenraum dieser Verzahnung selbst beschränkt. Deshalb können ausreichend hohe Schnittgeschwindigkeiten oft nur durch entsprechend hohe Achskreuzwinkel $\Sigma$ erzeugt werden.

Der Achskreuzwinkel $\Sigma$ kann aber in der Praxis nicht beliebig vorgegeben werden, da es neben der reinen vektoriellen Betrachtung der verschiedenen Bewegungen, die sich überlagern, eine Reihe von anderen Aspekten gibt, die zwingend berücksichtigt werden müssen. Diese zusätzlichen Aspekte, die in die Betrachtungen einfließen müssen, werden in den folgenden Absätzen beschrieben.

Beim Wälzschälen kommt ein Werkzeug 10 zum Einsatz, das mindestens eine geometrisch bestimmte Schneide umfasst. Die Schneide/Schneiden sind in Fig. 2 und Fig. 3 nicht gezeigt. Die Form und Anordnung der Schneiden gehören zu denjenigen Aspekten, die in der Praxis bei einer konkreten Auslegung berücksichtigt werden müssen.

Ausserdem kommt dem Werkzeug selbst beim Wälzschälen eine große Bedeutung zu. Das Wälzschälwerkzeug 10 hat in dem in Fig. 2 gezeigten Beispiel die Form eines geradverzahnten Stirnrads. Die Außenkontur des Grundkörpers in Fig. 2 ist zylindrisch. Sie kann aber auch kegelig (auch konisch genannt) sein, wie in Fig. 3 gezeigt. Da der oder die Zähne des Wälzschälwerkzeugs 10 über die gesamte Schneidkantenlänge in Eingriff kommen, benötigt jeder Zahn des Werkzeugs 10 an der Schneidkante einen ausreichenden Freiwinkel.

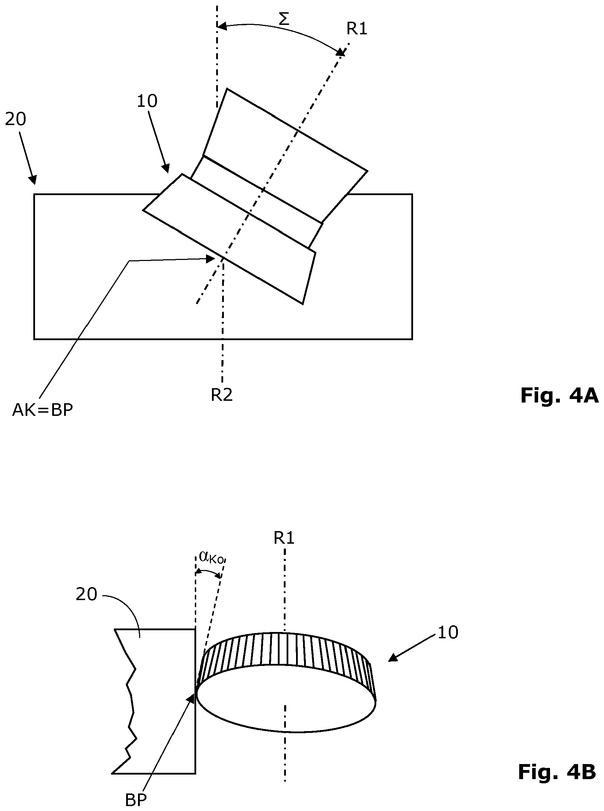

Wenn man von einem gerad- oder schrägverzahnten konischen Wälzschälwerkzeug 10 ausgeht, wie in den Figuren 4A und 4B gezeigt, dann erkennt man, dass ein solches Wälzschälwerkzeug 10 sogenannte konstruktive Freiwinkel aufgrund der konischen Grundform des Wälzschälwerkzeugs 10 aufweist. D.h. die Freiwinkel am Kopf und an den Flanken des konischen Wälzschälwerkzeugs 10 sind aufgrund der Geometrie des Wälzschälwerkzeugs 10 vorgegeben. Das Profil der Schneiden eines konischen Wälzschälwerkzeugs 10 muss jedoch bestimmte Bedingungen erfüllen, um überhaupt ein Nachschleifen zu ermöglichen. In den Figuren 4A und 4B ist ein konisches Wälzschälwerkzeug 10 beim Aussenverzahnen eines Werkstücks 20 gezeigt. Der sogenannte konstruktive Freiwinkel $\alpha_{Ko}$ am Schneidenkopf des konischen Wälzschälwerkzeugs 10 ist in Fig. 4B zu erkennen. Der Achskreuzpunkt AK und der Berührpunkt BP der Wälzkreise von Wälzschälwerkzeug 10 und Werkstück 20 fallen bei der Figur 4A zusammen und liegen auf dem Gemeinlot GL (nicht in den Figuren 4A und 4B zu erkennen bzw. gezeigt) der Rotationsachsen R1 und R2.

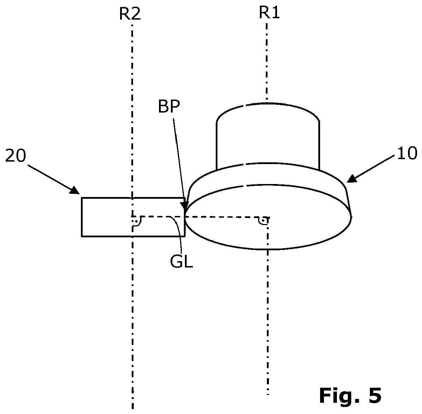

In Fig. 5 ist eine weitere Abbildung eines gerad- oder schrägverzahnten konischen Wälzschälwerkzeugs 10 und eines zylinderförmigen Werkstücks 20 gezeigt, wobei die Ansicht in Fig. 5 so gewählt wurde, dass beide Rotationsachsen R1 und R2 parallel verlaufen, obwohl die beiden Achsen R1 und R2 in Bezug zueinander windschief stehen. In Fig. 5 ist das Gemeinlot GL der beiden Achsen R1 und R2 zu erkennen. Der Berührpunkt BP liegt auf dem Gemeinlot GL, wie in Fig. 5 gezeigt.

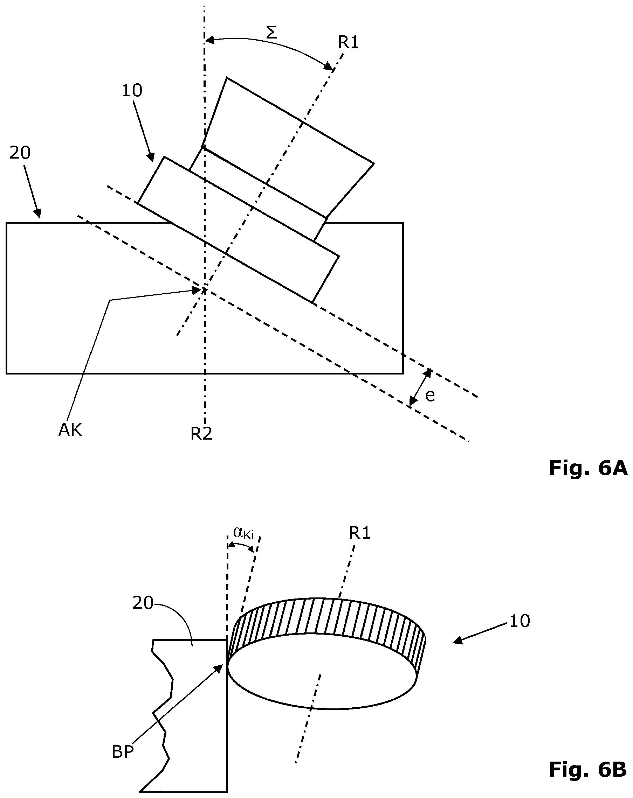

In den Figuren 6A und 6B ist eine Konstellation eines zylindrischen Wälzschälwerkzeugs 10 und eines aussenverzahnten zylindrischen Werkstücks 20 gezeigt. Das Wälzschälwerkzeug 10 ist nicht nur windschief in Bezug zur Rotationsachse R2 des Werkstücks 20 angeordnet (wie in Fig. 6A anhand des entsprechenden Achskreuzwinkeis $\Sigma$ zu erkennen ist), sondern derart gegenüber dem Werkstück 20 positioniert, dass es auch mit einem kleinen Winkel $\alpha_{Ki}$ von ihm weggeneigt ist (wie in Fig. 6B gut zu erkennen ist). Durch das Wegneigen des Wälzschälwerkzeugs 10 kann so ein effektiver Freiwinkel erzeugt werden, der in Fig. 6B für die Kopfschneide als $\alpha_{Ki}$ gezeigt ist. Auch an den Seitenschneiden des Werkzeugs werden durch das Wegneigen effektive Freiwinkel erzeugt. Diese fallen jedoch kleiner aus als an der Kopfschneide. In der Regel sind diese Freiwinkel nur halb so groß.

Wenn man von einem gerad- oder schrägverzahnten zylindrischen Wälzschälwerkzeug 10 ausgeht, wie in den Figuren 6A und 6B gezeigt, dann erkennt man, dass ein solches Wälzschälwerkzeug 10 konstruktionsbedingt weder am Kopf noch an den Flanken sogenannte konstruktive Freiwinkel aufweist. Wenn ein solches zylindrisches Wälzschälwerkzeug 10 in der herkömmlichen Art und Weise aufgespannt würde, wären keine Freiwinkel gegeben. Durch das Wegneigen des Wälzschälwerkzeugs 10 kann ein kinematischer Freiwinkel erzeugt werden, wie bereits beschrieben. Praktisch wird das Wegneigen des Wälzschälwerkzeugs 10 durch eine exzentrische Aufspannung des Wälzschälwerkzeugs 10 in der Maschine erzielt, um so einen Versatz der Spanfläche aus dem Achskreuzungspunkt AK zu bewirken. Der Berührpunkt BP der Wälzkreise von Wälzschälwerkzeug 10 und Werkstück 20 liegt durch das Wegneigen des Wälzschälwerkzeugs 10 nicht mehr auf dem Gemeinlot der Rotationsachsen R1 und R2. Der entsprechende Versatz (im Englischen Offset genannt) wird auch als Spanflächenversatz e bezeichnet und ist in Fig. 6A zu erkennen. Umso weiter das Wälzschälwerkzeug 10 weggeneigt wird, umso größer werden die effektiven Freiwinkel. Die für das Wälzschälen erforderlichen Freiwinkel liegen im Bereich zwischen 3 Grad und 5 Grad. Um diese Freiwinkel vorzugeben, ist ein Wegneigen von zylindrischen Wälzschälwerkzeugen 10 von bis zu 10 Grad erforderlich und in der Praxis üblich.

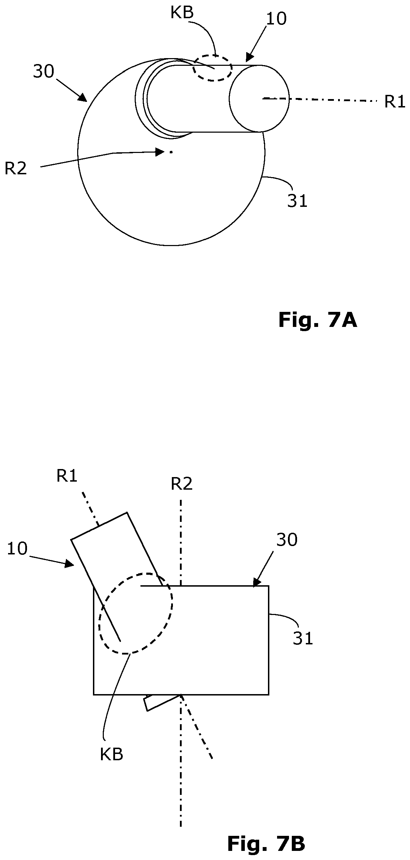

In den Figuren 7A und 7B ist ein Beispiel eines Werkstücks 30 gezeigt, das einen zylindrischen Innenring 31 aufweist, wobei dieser Innenring 31 in Fig. 7A in der Draufsicht nur als Kreis dargestellt ist. Innen an diesem Innenring 31 ist eine Innenverzahnung mittels Wälzschälen unter Einsatz eines konischen Wälzschälwerkzeugs 10 zu fertigen. Das Verhältnis von Zahnbreite des Werkstücks 30 zu Wälzkreisdurchmesser $d_{w2}$ des Werkstücks 30 beträgt hier etwa 0,62. Für das Erzielen einer ausreichenden Schnittgeschwindigkeit $v_c$ ist ein effektiver Achskreuzwinkel $\Sigma_{eff}$ von mindestens 26 Grad erforderlich. In den Figuren 7A und 7B ist eine Situation mit einem effektiven Achskreuzwinkel $\Sigma_{eff}$ = 26 Grad gezeigt. Es ist sowohl in Fig. 7A als auch in Fig. 7B zu erkennen, dass das konische Wälzschälwerkzeug 10 bei einem effektiven Achskreuzwinkel $\Sigma_{eff}$ von 26 Grad mit dem Innenring 31 bei dieser bisher üblichen ungeneigten Aufspannung kollidieren würde. In den Figuren 7A und 7B ist der Kollisionsbereich schematisch durch ein Oval KB gekennzeichnet.

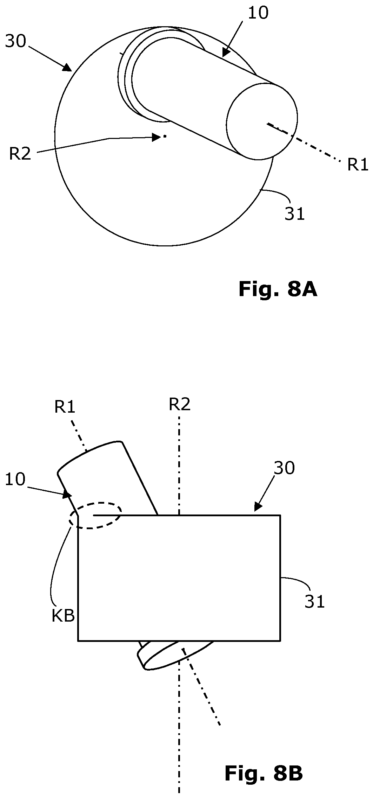

In den Figuren 8A und 8B ist ein Beispiel eines Werkstücks 30 gezeigt, das einen zylindrischen Innenring 31 aufweist, wobei dieser Innenring 31 in Fig. 8A in der Draufsicht nur als Kreis dargestellt ist. Innen an diesem Innenring 31 ist eine Innenverzahnung mittels Wälzschälen unter Einsatz eines zylindrischen Wälzschälwerkzeugs 10 zu fertigen. Für das Erzielen einer ausreichenden Schnittgeschwindigkeit $v_c$ ist wiederum ein effektiver Achskreuzwinkel $\Sigma_{eff}$ von mindestens 26 Grad erforderlich. In den Figuren 8A und 8B ist eine Situation mit einem effektiven Achskreuzwinkel $\Sigma_{eff}$ = 26 Grad und einem Neigungswinkel $\delta$ = 12 Grad gezeigt. Es ist sowohl in Fig. 8A als auch in Fig. 8B zu erkennen, dass das zylindrische Wälzschälwerkzeug 10 in dieser Konstellation trotz des Vorsehens eines Neigungswinkel $\delta$ von 12 Grad mit dem Innenring 31 kollidieren würde. In Fig. 8B ist der Kollisionsbereich schematisch durch ein Oval KB gekennzeichnet.

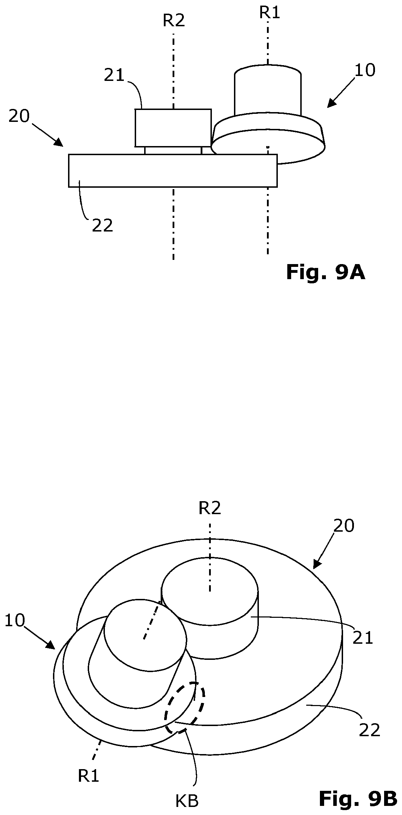

In den Figuren 9A und 9B ist ein Beispiel eines Werkstücks 20 gezeigt, das einen ersten zylindrischen Abschnitt 21 und einen zweiten zylindrischen Abschnitt 22 aufweist, wobei am ersten zylindrischen Abschnitt 21 eine Aussenverzahnung mittels Wälzschälen unter Einsatz eines konischen Wälzschälwerkzeugs 10 gefertigt werden soll. Bei dem Werkstück 20 kann es sich zum Beispiel um eine Welle handeln, die Bereiche mit unterschiedlichen Durchmessern hat. Für das Erzielen einer ausreichenden Schnittgeschwindigkeit $v_c$ ist ein effektiver Achskreuzwinkel $\Sigma_{eff}$ von mindestens 18 Grad erforderlich. Es ist sowohl in Fig. 9A als auch in Fig. 9B zu erkennen, dass das konische Wälzschälwerkzeug 10 (hier mit einem Kegelwinkel von 10 Grad) bei einem effektiven Achskreuzwinkel $\Sigma_{eff}$ von 18 Grad mit dem zweiten zylindrischen Abschnitt 22 des Werkstücks 20 bei der gezeigten, üblichen Aufspannung kollidieren würde. In Fig. 9B ist der Kollisionsbereich schematisch durch ein Oval KB gekennzeichnet.

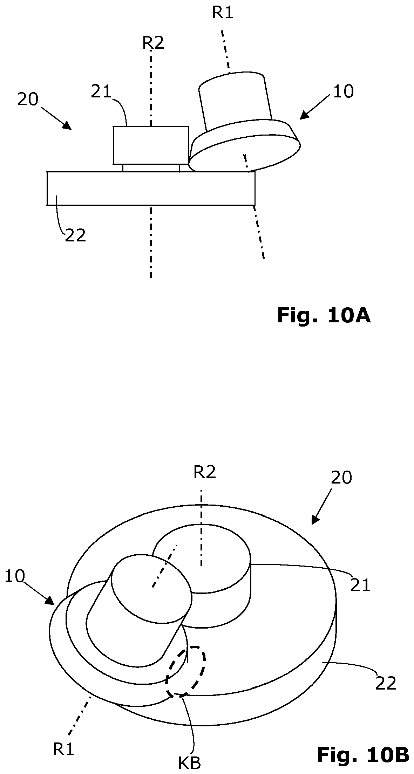

In den Figuren 10A und 10B ist erneut das Werkstück 20 nach Fig. 9A und 9B gezeigt, das einen ersten zylindrischen Abschnitt 21 und einen zweiten zylindrischen Abschnitt 22 aufweist, wobei am ersten zylindrischen Abschnitt 21 eine Aussenverzahnung mittels Wälzschälen unter Einsatz eines konischen Wälzschälwerkzeugs 10 gefertigt werden soll. Es kommt hier ein ähnliches konisches Wälzschälwerkzeug 10 zum Einsatz, wie in Fig. 9A und 9B, wobei das Wälzschälwerkzeug 10 im vorliegenden Fall einem Kegelwinkel von 20 Grad hat. Für das Erzielen einer ausreichenden Schnittgeschwindigkeit $v_c$ ist auch hier ein effektiver Achskreuzwinkel $\Sigma_{eff}$ von mindestens 18 Grad erforderlich. Das Wälzschälwerkzeug 10 ist mit einem Neigungswinkel $\delta$ = -10 Grad zum Werkstück 20 hingeneigt. Es ist sowohl in Fig. 10A als auch in Fig. 10B zu erkennen, dass das konische Wälzschälwerkzeug 10 bei einem effektiven Achskreuzwinkel $\Sigma_{eff}$ von 18 Grad mit dem zweiten zylindrischen Abschnitt 22 des Werkstücks 20 bei der gezeigten Aufspannung kollidieren würde. Dieser Art der Aufspannung ist aus einer europäischen Parallelanmeldung bekannt, die am gleichen Tag unter dem Titel "Verfahren zum Wälzschälen und entsprechende Vorrichtung mit Wälzschälwerkzeug" im Namen des Anmelders der vorliegenden Anmeldung eingereicht wurde. In Fig. 10B ist der Kollisionsbereich schematisch durch ein Oval KB gekennzeichnet.

Bei einem zylindrischen Wälzschälwerkzeug 10 käme es auch zur Kollision, wobei die Situation dort noch aufgrund des erforderlichen Wegneigens vom Werkstück schlechter ist.

Aus dem Dokument DE 10 2009 025945 A1 ist ein Verfahren zum Wälzschälen eines Werkstücks bekannt, bei dem eine gekoppelte Relativbewegung eines Wälzwerkzeugs in Bezug zu einem Werkstück ausgeführt wird. Ausserdem werden das Wälzschälwerkzeug und das Werkstück mit einem festen Drehverhältnis drehangetrieben. Gemäß der Lehre dieses Dokuments wird während des Wälzschälens die Rotationsachse des Wälzschälwerkzeugs windschief zur Rotationsachse des Werkstücks angeordnet.

Aufgabe der vorliegenden Erfindung ist es, ein Verfahren zum spanenden Bearbeiten der Zahnflanken eines Zahnrades oder anderer periodischer Strukturen bereitzustellen, das sich insbesondere zum Bearbeiten von Werkstücken eignet, die nur einen geringen Überlauf zulassen.

Aufgabe der vorliegenden Erfindung ist es auch, ein Verfahren zum spanenden Bearbeiten der Zahnflanken eines innenverzahnten Zahnrades oder anderer innenliegender periodischer Strukturen bereitzustellen. Insbesondere geht es um das Bearbeiten von Innenverzahnungen oder anderen innenliegenden periodischen Strukturen an Werkstücken, die einen kleinen Innendurchmesser relativ zur Grösse der bisher eingesetzten Werkzeuge und/oder beengte Verhältnisse in dem zu bearbeitenden Innenbereich haben. Insbesondere geht es in diesem Fall um das Erzielen möglichst hoher Schnittgeschwindigkeiten.

Insbesondere geht es um das Bearbeiten von Innenverzahnungen oder anderen innenliegenden periodischen Strukturen an Werkstücken, bei denen der Schälrüssel, respektive die Werkzeugspindel samt Werkzeug, weit in den Innenring des Werkstücks hineinreichen muss. Insbesondere geht es in diesem Fall um das Erzielen möglichst hoher Schnittgeschwindigkeiten.

Insbesondere geht es um das Bearbeiten von Innenverzahnungen oder anderen innenliegenden periodischen Strukturen an Werkstücken, die im Vergleich zum Durchmesser eine relativ hohe Zahnbreite aufweisen, und um das Erzielen möglichst hoher Schnittgeschwindigkeiten, wozu trotz der beengten Verhältnisse möglichst große Werkzeuge mit möglichst großem effektiven Achskreuzwinkel eingesetzt werden müssen.

Insbesondere geht es um das Bearbeiten von Innenverzahnungen oder anderen innenliegenden periodischen Strukturen an Werkstücken mit Innenring, wo der Innenring ein Verhältnis von Innendurchmesser zur erforderlichen Eintauchtiefe des Schälrüssels in das Werkstück aufweist, das kleiner ist als 2.

Ausserdem soll das Verfahren robust sein und sich für den Einsatz in der Serienfertigung, zum Beispiel in der Automobilbranche, eignen.

Diese Aufgabe wird gemäß der vorliegenden Erfindung durch ein Verfahren gelöst, das hier als modifiziertes Wälzschälverfahren bezeichnet wird. Bei dem modifizierten Wälzschälverfahren handelt es sich um ein kontinuierliches, spanabhebendes Verfahren, das zur Herstellung aussenliegender und innenliegender rotationssymmetrischer periodischer Strukturen geeignet ist. Wie der Name Wälzschälen andeutet, handelt es sich um ein abwälzendes Verfahren. Um genau zu sein, handelt es sich um ein kontinuierlich wälzendes Verzahnverfahren. Das Wälzschälen wird hier für die Beschreibung und Auslegung des Erzeugungsgetriebes mit der Kinematik eines Schraubradtriebs verglichen.

Das Verfahren ist zum Wälzschälen eines Werkstücks mit rotationssymmetrischer, periodischer Struktur unter Einsatz eines Wälzschälwerkzeugs ausgelegt. Bei diesem Wälzschälverfahren

- dreht sich das Wälzschälwerkzeug kontinuierlich um eine erste Rotationsachse,
- dreht sich das Werkstück kontinuierlich und synchron zum Wälzschälwerkzeug um eine zweite Rotationsachse,
- vollführt das sich drehende Wälzschälwerkzeug eine Relativbewegung in Bezug auf das sich drehende Werkstück, wobei
- während dem Wälzschälen ein positiver oder ein negativer Neigungswinkel des Wälzschälwerkzeugs eingestellt ist, dessen Betrag grösser gleich 15 Grad ist, und

- die erste Rotationsachse windschief zur zweiten Rotationsachse verläuft.

Durch das gekoppelte Drehen und Bewegen des Wälzschälwerkzeugs und des Werkstücks ergibt sich eine Relativbewegung zwischen dem Wälzschälwerkzeug und dem Werkstück, die der Relativbewegung eines Schraubradgetriebes entspricht oder einem Schraubradgetriebe angenähert ist.

Das Wälzschälwerkzeug ist während der Bearbeitungsphase deutlich vom Werkstück weggeneigt oder deutlich zum Werkstück hingeneigt.

Vorzugsweise ist das Wälzschälwerkzeug bei allen Ausführungsformen deutlich von der Verzahnung oder von der periodischen Struktur am Werkstück weggeneigt oder deutlich zu der Verzahnung oder zur periodischen Struktur am Werkstück hingeneigt.

Der Betrags des Neigungswinkels $\delta$ liegt vorzugsweise in einem Winkelbereich zwischen 15 Grad und 45 Grad und vorzugsweise zwischen 20 Grad und 35 Grad.

Die Erfindung kann auch dann zum Einsatz kommen, wenn es sich bei dem Werkstück um ein Werkstück handelt, das nur einen geringen Überlauf zulässt, wie zum Beispiel ein Bauteil mit umlaufendem, innen- oder aussenliegenden Kragen oder bei Bauteilen, bei denen z.B. eine innenliegende rotationssymmetrische periodische Struktur in einem Hohlzylinder zu fertigen ist, der nicht durchgängig ist (Sackloch).

Kennzeichnend für das modifizierte Wälzschälverfahren der Erfindung ist, dass die relativen Bewegungsabläufe (Relativbewegung genannt) zwischen Werkstück und Wälzschälwerkzeug so vorgegeben und koordiniert ausgeführt werden, dass es nicht zu Kollisionen kommt.

Bei dem entsprechenden modifizierten Wälzschälverfahren handelt es sich um ein kontinuierliches, spanabhebendes Verfahren. Wie der Name Wälzschälen andeutet, handelt es sich um ein abwälzendes Verfahren. Um genau zu sein, handelt es sich um ein kontinuierlich wälzendes Verzahnverfahren.

Vorzugsweise kommt bei allen Ausführungsformen ein schälradartiges Wälzschälwerkzeug zum Einsatz, das sich deutlich von Stirnmesserkopf-Werkzeugen unterscheidet.

Gemäss Erfindung weist das Wälzschälwerkzeug einen schälradartigen Werkzeugbereich auf, der Schneiden hat, die in Form von Schneidzähne ausgeprägt sind, die schräg nach aussen ragen.

Gemäss Erfindung kommt vorzugsweise beim Herstellen von aussenliegenden, periodischen Strukturen ein Wälzschälwerkzeug zum Einsatz, das einen schälradartigen Werkzeugbereich aufweist, der die Form eines Schneidrads, vorzugsweise die Form eines Scheibenschneidrads, Schaftschneidrads oder Scheiben-Glockenschneidrads (z.B. gemäss DIN 3972 oder DIN 5480) hat.

Gemäss Erfindung kommt vorzugsweise beim Herstellen von innenliegenden, periodischen Strukturen ein Schälrüssel zum Einsatz, der einerseits lang ist (d.h. eine möglichst grosse Eintauchtiefe ermöglicht), um ausreichend weit in den Innenring des Werkstücks hineinzureichen, und der andererseits einen möglichst grossen (Schaft-) Durchmesser hat, um dem Schälrüssel die für das Wälzschälen erforderliche Steifigkeit zu geben.

Vorzugsweise kommt bei allen Ausführungsformen beim Innenverzahnen ein Wälzschälwerkzeug zum Einsatz, das zusammen mit einer Werkzeugspindel und/oder einem Adapter eine rüsselartige Form mit grosser Eintauchtiefe aufweist.

Gemäss Erfindung weist der Schälrüssel einen schälradartigen Werkzeugbereich auf, der die Form eines Scheibenschneidrads, Schaftschneidrads oder Scheiben-Glockenschneidrads (z.B. gemäss DIN 3972 oder DIN 5480) hat.

Ausserdem wird gemäss Erfindung der effektive Achskreuzungswinkel $\Sigma_{eff}$ bei allen Ausführungsformen möglichst groß vorgegeben, um ausreichende Schnittgeschwindigkeiten zu erzielen. Dieser Aspekt spielt besonders bei einer kleinen Werkstückgröße eine Rolle. Da der Durchmesser der Verzahnung fest vorgegeben ist und die maximale Drehzahl für eine Maschine auch feststeht, bleibt nur das Mittel, den effektiven Achskreuzwinkel $\Sigma_{eff}$ ausreichend groß zu machen.

Die Wälzschälwerkzeuge gemäss Erfindung sind entweder als sogenannte Vollwerkzeuge ausgelegt, d.h. es handelt sich um Werkzeuge, die im Wesentlichen einstückig ausgeführt sind, oder sie sind als Messerkopf-Werkzeuge (hier Stabmesser-Schälrad genannt) ausgelegt, die einen Messerkopfgrundkörper haben, der mit Messereinsätzen, vorzugsweise in Form von Stabmessern, bestückt ist.

Die Wälzschälwerkzeuge haben gemäss Erfindung vorzugsweise bei allen Ausführungsformen sogenannte konstruktive Freiwinkel. D.h. die Freiwinkel werden aufgrund der Geometrie des Wälzschälwerkzeugs unter Berücksichtigung der Kinematik vorgegeben.

Die Erfindung findet vorzugsweise bei Bauteilen Anwendung, die eine sogenannte anliegende Störkontur (z.B. eine Kollisionsflanke) haben und die daher in den meisten Fällen nicht mit einem konventionellen Wälzschälverfahren hergestellt werden können.

Die Erfindung basiert darauf, dass der Neigungswinkel $\delta$ betragsmäßig grösser gleich 15 Grad eingestellt wird. D.h. das Wälzschälwerkzeug wird gegenüber herkömmlichen Wälzschälverfahren deutlich stärker geneigt.

Es lassen sich mit dem beschriebenen und beanspruchten modifizierten Wälzschälverfahren und der Vorrichtung verschiedenste Verzahnungen und andere periodisch wiederkehrende Strukturen herstellen.

Es wird für zylindrische Verzahnungen des Werkstücks ein Spanflächenversatz e vorgegeben.

Beim modifizierten Wälzschälen wird Material am Werkstück fortschreitend abgetragen, bis die Zähne oder die anderen periodischen Strukturen vollständig ausgebildet sind.

Das erfindungsgemässe Verfahren kann sowohl als Trocken- oder Nassbearbeitung durchgeführt werden.

Das modifizierte Wälzschälen kann nicht nur für die Bearbeitung von Außenverzahnungen eingesetzt werden. Das modifizierte Wälzschälen kann auch vorteilhaft für das Herstellen von Innenverzahnungen eingesetzt werden.

Das modifizierte Wälzschälen kann sowohl beim Vorverzahnen vor der Wärmebehandlung des Werkstücks als auch beim Fertigverzahnen nach der Wärmebehandlung eingesetzt werden. D.h. das Wälzschälen eignet sich zur Weichbearbeitung und zur Hart(fein)bearbeitung.

ZEICHNUNGEN

Weitere Einzelheiten und Vorteile der Erfindung werden im Folgenden anhand von Ausführungsbeispielen und mit Bezug auf die Zeichnung beschrieben. In allen schematischen Zeichnungen (also auch bei den Kollisionsdarstellungen in den Figuren 7A, 7B, 8A, 8B, 9A, 9B, 10A und 10B) sind, der Einfachheit der Darstellung halber, Werkstück und Wälzschälwerkzeug auf die Situation am Wälzkreis (bzw. am Werkstück auf den Wälzzylinder) reduziert. Die dargestellten Verhältnisse gelten aber auch für die ganze Verzahnung mit einer Zahnhöhe.

FIG. 1     zeigt eine schematische Darstellung eines Stossrads mit zylindrischer Außenkontur im Eingriff mit einem außenverzahnten Werkstück beim Wälzstossen;

FIG. 2     zeigt eine schematische Darstellung eines geradverzahnten Schälrads mit zylindrischer Außenkontur im Eingriff mit einem außenverzahnten Werkstück beim Wälzschälen;

FIG. 3     zeigt eine schematische Darstellung eines schrägverzahnten Schälrads mit konischer Außenkontur im Eingriff mit einem außenverzahnten Werkstück beim Wälzschälen;

FIG. 4A     zeigt eine schematische Achskreuzprojektion (Berührebenenprojektion) eines konischen Wälzschälwerkzeugs beim Wälzschälen eines außenverzahnten Werkstücks, wobei in konventioneller Art und Weise ein Achskreuzwinkel vorgegeben ist;

FIG. 4B     zeigt eine schematische Achskreuzseitenprojektion (Berührebenenseitenprojektion) des konischen Wälzschälwerkzeugs und Werkstücks nach Fig. 4A;

FIG. 5     zeigt eine schematische Ansicht eines weiteren konischen Wälzschälwerkzeugs beim Wälzschälen eines außenverzahnten Werkstücks, wobei das Wälzschälwerkzeug in konventioneller Art und Weise gegenüber dem Werkstück ungeneigt ist;

FIG. 6A     zeigt eine schematische Achskreuzprojektion eines zylindrischen Wälzschälwerkzeugs beim Wälzschälen eines außenverzahnten Werkstücks, wobei das Wälzschälwerkzeug in konventioneller Art und Weise mit einem kleinen Winkel vom Werkstück weggeneigt ist und sich ein Spanflächenversatz ergibt;

FIG. 6B     zeigt eine schematische Berührebenenseitenprojektion des zylindrischen Wälzschälwerkzeugs und Werkstücks nach Fig. 6A;

FIG. 7A     zeigt eine schematische Ansicht eines konischen Wälzschälwerkzeugs beim Wälzschälen eines innenverzahnten Werkstücks, wobei ein effektiver Achskreuzwinkel $\Sigma_{eff}$ = 26 Grad vorgegeben ist und es zur Kollision zwischen dem Wälzschälwerkzeug und dem Werkstück kommt;

FIG. 7B     zeigt eine schematische Achskreuzrückseitenprojektion (Berührebenenrückseitenprojektion) des konischen Wälzschälwerkzeugs und Werkstücks nach Fig. 7A, welche den Kollisionsbereich deutlich zeigt;

FIG. 8A     zeigt eine schematische Ansicht eines zylindrischen Wälzschälwerkzeugs beim Wälzschälen eines innenverzahnten Werkstücks, wobei das Wälzschälwerkzeug mit einem effektiven Achskreuzwinkel $\Sigma_{eff}$ = 26 Grad und einem Neigungswinkel von 12 Grad geneigt ist und es trotzdem zur Kollision zwischen dem Wälzschälwerkzeug und dem Werkstück kommt;

**FIG. 8B**  zeigt eine schematische Berührebenenrückseitenprojektion des zylindrischen Wälzschälwerkzeugs und Werkstücks nach Fig. 8A, welche den Kollisionsbereich deutlich zeigt;

**FIG. 9A**  zeigt eine schematische Achskreuzseitenprojektion (Berührebenenseitenprojektion) eines konischen Wälzschälwerkzeugs beim Wälzschälen eines außenverzahnten Werkstücks mit geringem Überlauf, wobei in konventioneller Art und Weise ein effektiver Achskreuzwinkel $\Sigma_{eff}$ von 18 Grad vorgegeben ist und es zur Kollision zwischen dem Wälzschälwerkzeug und dem Werkstück kommt;

**FIG. 9B**  zeigt eine schematische Ansicht des konischen Wälzschälwerkzeugs und Werkstücks nach Fig. 9A, um die Kollision deutlicher zu veranschaulichen;

**FIG. 10A**  zeigt eine schematische Berührebenenseitenprojektion eines weiteren konischen Wälzschälwerkzeugs beim Wälzschälen eines außenverzahnten Werkstücks mit geringem Überlauf, wobei ein effektiver Achskreuzwinkel $\Sigma_{eff}$ von 18 Grad vorgegeben ist und das Wälzschälwerkzeug mit einem Neigungswinkel $\delta$ = -10 Grad zum Werkstück hingeneigt ist, und es trotzdem zur Kollision zwischen dem Wälzschälwerkzeug und dem Werkstück kommt;

**FIG. 10B**  zeigt eine schematische Ansicht des konischen Wälzschälwerkzeugs und Werkstücks nach Fig. 10A, um die Kollision deutlicher zu veranschaulichen;

**FIG. 11**  zeigt die Berührebene BE für eine Aussenverzahnung und einige der relevanten Winkel und Vektoren;

**FIG. 12**  zeigt eine schematische Ansicht eines konischen Wälzschälwerkzeugs in Bezug zur sogenannten Berührebene mit einem deutlichen negativen Neigungswinkel $\delta$ = - 25 Grad;

**FIG. 13**  zeigt eine schematische Ansicht eines konischen Wälzschälwerkzeugs in Bezug zur sogenannten Berührebene mit einem deutlichen positiven Neigungswinkel $\delta$ = 25 Grad;

**FIG. 14A**  zeigt eine schematische Ansicht eines konischen Wälzschälwerkzeugs beim modifizierten Wälzschälen eines außenverzahnten zylindrischen Werkstücks, wobei das Wälzschälwerkzeug deutlich zum Werkstück hingeneigt ist (Neigungswinkel $\delta$ = - 20 Grad; Konuswinkel = 30 Grad);

**FIG. 14B**  zeigt eine weitere schematische Ansicht des konischen Wälzschälwerkzeugs und Werkstücks nach Fig. 14A;

**FIG. 14C**  zeigt eine schematische Achskreuzprojektion des konischen Wälzschälwerkzeugs und Werkstücks nach Fig. 14A;

**FIG. 14D**  zeigt eine schematische Achskreuzseitenprojektion des konischen Wälzschälwerkzeugs und Werkstücks nach Fig. 14A;

**FIG. 14E**  zeigt eine schematische Berührebenenseitenprojektion des konischen Wälzschälwerkzeugs und Werkstücks nach Fig. 14A;

**FIG. 15A**  zeigt eine schematische Ansicht eines zylindrischen Wälzschälwerkzeugs beim modifizierten Wälzschälen eines innenverzahnten zylindrischen Werkstücks, wobei das Wälzschälwerkzeug deutlich vom Werkstück weggeneigt ist (Neigungswinkel $\delta$ = 20 Grad);

**FIG. 15B**  zeigt eine weitere schematische Achskreuzrückseitenprojektion des Werkstücks zusammen mit dem konischen Wälzschälwerkzeug nach Fig. 15A;

**FIG. 16A**  zeigt eine schematische Ansicht eines konischen Wälzschälwerkzeugs beim modifizierten Wälzschälen eines außenverzahnten zylindrischen Werkstücks mit geringem Überlauf, wobei das Wälzschälwerkzeug deutlich zum Werkstück hingeneigt ist (Neigungswinkel $\delta$ = - 24 Grad; Konuswinkel = 34 Grad);

**FIG. 16B**  zeigt eine weitere schematische Ansicht des konischen Wälzschälwerkzeugs und Werkstücks nach Fig. 16A;

**FIG. 17**   zeigt eine Ausführungsform eines Wälzschälwerkzeugs in einer Perspektivansicht;

**FIG. 18A**   zeigt eine stark schematisierte Ansicht eines sich konisch verjüngenden Wälzschälwerkzeugs, das im Zusammenhang mit der Erfindung bei einem Neigungswinkel $\delta$ von -20 Grad eingesetzt werden kann;

**FIG. 18B**   zeigt eine stark schematisierte Ansicht des Wälzschälwerkzeugs nach Fig. 18A zusammen mit einem aussenverzahnten zylindrischen Werkstück, wobei ein Neigungswinkel $\delta$ von -20 Grad vorgegeben ist;

**FIG. 19**   zeigt eine stark schematisierte Ansicht des Wälzschälwerkzeugs zusammen mit einem aussenverzahnten zylindrischen Werkstück, wobei ein Neigungswinkel $\delta$ von +20 Grad vorgegeben ist;

**FIG. 20**   zeigt eine stark schematisierte Ansicht eines Wälzschälwerkzeugs in Form eines Schneidrad-Vollwerkzeugs, das für den Einsatz bei einem Neigungswinkel $\delta$ von ca. -20 Grad geeignet ist;

**FIG. 21A**   zeigt eine stark schematisierte Ansicht eines weiteren Wälzschälwerkzeugs in Form eines Schneidrad-Vollwerkzeugs, das für den Einsatz bei einem deutlichen positiven Neigungswinkel $\delta$ geeignet ist;

**FIG. 21B**   zeigt eine stark schematisierte Ansicht des Wälzschälwerkzeugs nach Fig. 21A zusammen mit einem aussenverzahnten zylindrischen Werkstück, wobei ein Neigungswinkel $\delta$ von +20 Grad vorgegeben ist;

**FIG. 22A**   zeigt eine stark schematisierte Ansicht eines weiteren Wälzschälwerkzeugs in Form eines Schneidrad-Vollwerkzeugs, das für den Einsatz bei einem deutlichen negativen Neigungswinkel $\delta$ geeignet ist;

**FIG. 22B**   zeigt eine stark schematisierte Ansicht des Wälzschälwerkzeugs nach Fig. 22A zusammen mit einem aussenverzahnten zylindrischen Werkstück, wobei ein Neigungswinkel $\delta$ von -20 Grad vorgegeben ist;

**FIG. 23**   zeigt eine stark perspektivische Ansicht einer erfindungsgemässen Maschine mit einem Wälzschälwerkzeug beim Verzahnen eines innenverzahnten Werkstücks.

## DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Rotationssymmetrische periodische Strukturen sind zum Beispiel Zahnräder mit Innen- und/oder Außenverzahnung. Es kann sich aber zum Beispiel auch um Bremsscheiben, Kupplungs- oder Getriebeelemente und dergleichen handeln. Insbesondere eignen sich die Wälzschälwerkzeuge zur Herstellung von Ritzelwellen, Schnecken, Hohlrädern, Zahnradpumpen, Ringgelenknaben (Ringgelenke finden zum Beispiel im Kraftfahrzeugsektor Verwendung, um die Kraft von einem Differential auf ein Fahrzeugrad zu übertragen), Keilwellenverbindungen, Schiebemuffen, Riemenscheiben und dergleichen. Die periodischen Strukturen werden hier auch als periodisch wiederkehrende Strukturen bezeichnet.

Im Folgenden ist primär von Zahnrädern, Zähnen und Zahnlücken die Rede. Die Erfindung lässt sich aber auch auf andere Bauteile mit anderen periodischen Strukturen übertragen, wie oben erwähnt. Bei diesen anderen Bauteilen geht es in diesem Fall dann nicht um Zahnlücken sondern zum Beispiel um Nuten oder Rillen.

Gemäss Erfindung geht es um ein sogenanntes modifiziertes Wälzschälverfahren, bei dem das Wälzschälwerkzeug 100 deutlich zum Werkstück 50 oder 60 hingeneigt oder deutlich vom Werkstück 50 oder 70 weggeneigt ist. Im Folgenden werden erst die Grundlagen zur Auslegung von Wälzschälprozessen mit deutlicher Neigung beschrieben.

Grundsätzlich entspricht die Relativbewegung zwischen dem Wälzschälwerkzeug 100 und dem Werkstück 50, 60, 70 beim Wälzschälen einem Schraubradgetriebe, auch Wälzschraubgetriebe genannt. Es handelt sich bei dem Schraubradgetriebe um ein räumliches Getriebe.

Die Grundauslegung des Wälzschälprozesses erfolgt deshalb, wie bei der Auslegung von Getrieben, an einem sogenannten Auslegungspunkt AP. Unter Grundauslegung wird hier die Festlegung der räumlichen Anordnung und Bewegung des Wälzschälwerkzeugs 100 bzgl. des Werkstücks 50, 60, 70 (Kinematik) sowie die Festlegung der geometrischen Grundgrössen des Wälzschälwerkzeugs 100 wie etwa Durchmesser und Schrägungswinkel (Werkzeuggrundgeometrie) verstanden.

Bisher wurde bei der Auslegung von Wälzschälprozessen mit geneigtem Werkzeug die Werkzeuggrundgeometrie (etwa Durchmesser und Schrägungswinkel) durch die Betrachtung der Eingriffsverhältnisse am Auslegungspunkt AP des ungeneigten Werkzeugs festgelegt. Das so bestimmte Werkzeug wurde dann bisher mittels Spanflächenversatz in eine geneigte Position gebracht. Für die Bestimmung der resultierenden exakten Schneidengeometrie sind hierbei verschiedene Vorgehensweisen bekannt. Für die zur Beschaffung kinematischer Freiwinkel üblichen Neigungswinkel $\delta$ bis zu 10 Grad wird diese Vorgehensweise bisher als legitim angesehen, da wegen cos(10 Grad)$\approx$0.98 die Abweichung des effektiven Achskreuzwinkels $\Sigma_{eff}$ vom Achskreuzwinkel $\Sigma$ sehr gering ausfällt und somit vernachlässigbar ist. Die Eingriffsverhältnisse zwischen ungeneigtem und geneigtem Werkzeug unterscheiden sich in diesem Fall nur unwesentlich.

An dem Auslegungspunkt AP werden die geometrischen und kinematischen Eingriffsverhältnisse möglichst optimal gestaltet. Die Eingriffsverhältnisse ändern sich mit zunehmender Entfernung vom Auslegungspunkt AP. Das Wälzschälen stellt in diesem Zusammenhang ein sehr komplexes Verfahren dar, bei dem sich die Eingriffverhältnisse auch bei der Bewegung der Schneide kontinuierlich ändern. Jedoch lassen sich über die Eingriffsverhältnisse am Auslegungspunkt AP die sich ändernden Eingriffsverhältnisse gezielt beeinflussen.

Deshalb kommt der korrekten Auslegung der Eingriffsverhältnisse am Auslegungspunkt AP eine wesentliche Bedeutung bei der Auslegung von Wälzschälprozessen zu.

Beim modifizierten Wälzschälverfahren wird wie folgt vorgegangen. Mit einem betragsmäßig wachsenden Neigungswinkel $\delta$ steigt auch die Abweichung des effektiven Achskreuzwinkels $\Sigma_{eff}$ vom Achskreuzwinkel $\Sigma$. Für Neigungswinkel $\delta$, die betragsmäßig größer als 15 Grad sind, unterscheiden sich die Eingriffsverhältnisse zwischen ungeneigtem und geneigtem Wälzschälwerkzeug 100 wesentlich. Untersuchungen haben ergeben, dass eine Auslegung des Wälzschälwerkzeugs 100 im ungeneigten Zustand keine ausreichend guten Schnittbedingungen für die Arbeit mit deutlich geneigten Wälzschälwerkzeug 100 mehr liefert. So wird beispielsweise die "Schnittrichtungsbedingung", welche dafür sorgt, dass der Schnittgeschwindigkeitsvektor $\vec{v}_c$ in die Schrägungsrichtung der zu erzeugenden Zahnlücke zeigt, verletzt, wenn man bei der Auslegung den Achskreuzwinkel $\Sigma$ statt den effektiven Achskreuzwinkel $\Sigma_{eff}$ verwendet hat, um den Wälzkreisdurchmesser $d_{w1}$ des Wälzschälwerkzeugs 100 zu ermitteln.

Gemäss Erfindung wird die direkte Auslegung des Wälzschälwerkzeugs 100 unter Beachtung der beabsichtigten räumlichen Anordnung mit deutlicher Neigung vorgeschlagen. Dazu müssen die Eingriffverhältnisse im Auslegungspunkt AP unter Betrachtung der Schnittbedingungen in der Berührebene BE des räumlichen Getriebes gestaltet werden.

**Begriffe zur Achsanordnung:**

Es gibt mehrere Begriffe, die zur Festlegung der Achsanordnung erforderlich sind. Diese Begriffe werden in der folgenden Tabelle beschrieben.

| | |
|---|---|
| Gemeinlot, Gemeinlotfußpunkte, Gemeinlotvektor | Wälzschälprozesse zeichnen sich durch sich im Raum kreuzende Rotationsachsen R2 und R1 von Werkstück 50, 60, 70 und Wälzschälwerkzeug 100 aus. Zu den beiden sich kreuzenden Rotationsachsen R2 und R1 lässt sich eindeutig das Gemeinlot GL angeben. <br> Der Fußpunkt des Gemeinlots auf der Rotationsachse R2 des Werkstücks 50, 60, 70 sei GLF2. Der Fußpunkt des Gemeinlots auf der Rotationsachse R1 des Wälzschälwerkzeugs 100 sei GLF1. <br> Der Gemeinlotvektor GLV sei der Verbindungsvektor von GLF1 nach GLF2. |
| Achskreuzprojektion, Achskreuzpunkt | Die Betrachtung von Werkstück 50, 60, 70 und Wälzschälwerkzeug 100 entlang des Gemeinlots GL in Richtung des Gemeinlotvektors GLV wird als Achskreuzprojektion bezeichnet. <br> In der Achskreuzprojektion schneiden sich die projizierten Rotationsachsen R1 und R2 im Achskreuzpunkt AK, welcher dem in der Projektion zum Punkt reduzierten Gemeinlot GL entspricht. |
| Achskreuzwinkel | Der Achskreuzwinkel $\Sigma$ ist der betragsmäßig kleinere Winkel, der von den beiden Rotationsachsen R1 und R2 eingeschlossen wird. Er wird in der Achskreuzprojektion sichtbar. Es gilt -90° < $\Sigma$ < 90°, $\Sigma \neq$0°. |

(fortgesetzt)

| | |
|---|---|
| | Der Achskreuzwinkel Σ ist vorzeichenbehaftet. Das Vorzeichen ist in der Achskreuzprojektion wie folgt ohne Beschränkung der Allgemeinheit festgelegt: Für Außenverzahnungen ist der Achskreuzwinkel Σ positiv, wenn die projizierte Rotationsachse R1 um den Achskreuzpunkt AK mathematisch positiv um $|\Sigma|$ bezüglich der projizierten Rotationsachse R2 verdreht ist. Für |

| | |
|---|---|
| | Innenverzahnungen ist er positiv, wenn die projizierte Rotationsachse R1 um den Achskreuzpunkt AK mathematisch negativ um $|\Sigma|$ bezüglich der projizierten Rotationsachse R2 verdreht ist. |
| Achsabstand | Der Achsabstand a entspricht der Länge des Gemeinlotvektors GLV. Er beschreibt den kleinsten Abstand zwischen den Rotationsachsen R1 und R2. |

**Begriffe zum Kontakt zwischen Wälzschälwerkzeug und Werkstück:**

Es gibt mehrere Begriffe, die zur Beschreibung des Kontakts zwischen Wälzschälwerkzeug und Werkstück erforderlich sind. Diese Begriffe werden in der folgenden Tabelle beschrieben.

| | |
|---|---|
| Wälzkreise | Die Wälzkreise von Werkstück 50, 60, 70 und Wälzschälwerkzeug 100 berühren sich im Auslegungspunkt AP, der deshalb auch Berührpunkt BP genannt wird. Der Wälzkreis W2 des Werkstücks 50, 60, 70 (auch Werkstückwälzkreis genannt) liegt in einer Ebene, die senkrecht zur Rotationsachse R2 des Werkstücks 50, 60, 70 liegt. Der Mittelpunkt des Wälzkreises W2 liegt auf der Rotationsachse R2 des Werkstücks 50, 60, 70. Der Durchmesser des Werkstückwälzkreises W2 lautet $d_{w2}$. Der Wälzkreis W1 des Wälzschälwerkzeugs 100 (auch Werkzeugwälzkreis genannt) liegt in einer Ebene, die senkrecht zur Rotationsachse R1 des Wälzschälwerkzeugs 100 liegt. Der Mittelpunkt des Wälzkreises W1 liegt auf der Rotationsachse R1 des Wälzschälwerkzeugs 100. Der Durchmesser des Werkzeugwälzkreises W1 lautet $d_{w1}$. Der Wälzkreisdurchmesser $d_{w1}$ des Werkstücks 50, 60, 70 ist vorzeichenbehaftet. Bei Außenverzahnungen ist er positiv, bei Innenverzahnungen negativ. |
| Bezugsebenen | Die Werkstückbezugsebene ist diejenige Ebene, in der der |

| | |
|---|---|
| | Werkstückwälzkreis W2 liegt. Die Werkzeugbezugsebene ist diejenige Ebene, in der der Werkzeugwälzkreis W1 liegt. |
| Spanhalbraum, Schneidenhalbraum | Die Werkzeugbezugsebene teilt den 3-dimensionalen Raum in zwei Hälften. Der Spanhalbraum sei diejenige Hälfte, in die die aus dem Schneidenmaterial des Wälzschälwerkzeugs 100 herauszeigenden Spanflächennormalen hineinzeigen. Die andere Hälfte sei mit Schneidenhalbraum bezeichnet. Die Schneiden des Wälzschälwerkzeugs 100 erstrecken sich also im Wesentlichen im Schneidenhalbraum, können aber auch in den Spanhalbraum hineinreichen, wobei die Spanflächen dem Spanhalbraum zugewandt sind. |
| Geschwindigkeitsvektoren | Im Auslegungspunkt AP kann der aus der Werkstückdrehung um R2 resultierende Geschwindigkeitsvektor $\vec{v}_2$ des zugehörigen Werkstückpunktes angegeben werden. Er liegt in der Werkstückbezugsebene, tangential zum Werkstückwälzkreis W2. Der Betrag ist $v_2 = |\pi \cdot d_{W2} \cdot n_2|$ mit der vorzeichenbehafteten Werkstückdrehzahl $n_2$. Im Auslegungspunkt AP kann ebenso der aus der Werkzeugdrehung um R1 resultierende Geschwindigkeitsvektor $\vec{v}_1$ des zugehörigen Werkzeugpunktes angegeben werden. Er liegt in der Werkzeugbezugsebene, tangential zum Werkzeugwälzkreis W1. Der Betrag ist $v_1 = |\pi \cdot d_{w1} \cdot n_1|$ mit der vorzeichenbehafteten Werkzeugdrehzahl $n_1$. |

(fortgesetzt)

| | |
|---|---|
| Berührradiusvektoren | Vom Auslegungspunkt AP kann das Lot auf die Rotationsachse R2 des Werkstücks 50, 60, 70 gefällt werden. Der zugehörige Lotfußpunkt LF2 entspricht dem Schnittpunkt zwischen Werkstückbezugsebene und Werkstückrotationsachse R2 (siehe z.B. Fig. 14B). Der Berührradiusvektor $\vec{r}_2$ des Werkstücks 50, 60, 70 ist bei Innenverzahnungen der Vektor vom Lotfußpunkt LF2 zum Auslegungspunkt AP, bei Außenverzahnungen der Vektor vom Auslegungspunkt AP zum Lotfußpunkt LF2. Seine |
| | Länge ist $|d_{w2}|/2$.<br>Vom Auslegungspunkt AP kann das Lot auf die Rotationsachse R1 des Wälzschälwerkzeugs 100 gefällt werden. Der zugehörige Lotfußpunkt LF1 entspricht dem Schnittpunkt zwischen Werkzeugbezugsebene und Werkzeugrotationsachse R1 (siehe z.B. Fig. 14B). Der Vektor vom Lotfußpunkt LF1 zum Auslegungspunkt AP heißt Berührradiusvektor $\vec{r}_1$ des Werkzeugs 100. Seine Länge ist $d_{w1}/2$. |
| Berührebene BE | Die beiden Geschwindigkeitsvektoren $\vec{v}_2$ und $\vec{v}_1$ spannen die sogenannte Berührebene BE auf (sie z.B. Fig. 12). In dieser Berührebene BE berühren sich die Wälzkreise W2 und W1 von Werkstück 50, 60, 70 und Wälzschälwerkzeug 100, und zwar im Auslegungspunkt AP. Darüber hinaus berühren sich in dieser Berührebene BE auslegungsgemäß auch die theoretische Wälzfläche der Verzahnung von Werkstück 50, 60, 70 und der Wälzkreis W1 von Wälzschälwerkzeug 100. Genauer gesagt, ist die Berührebene BE tangential zur erwähnten Wälzfläche der Verzahnung von Werkstück 50, 60, 70, und zwar im Auslegungspunkt AP. |
| Wälzfläche, Bezugswälzfläche | Die Wälzfläche einer Verzahnung wird auch Bezugswälzfläche genannt. Sie geht durch den Auslegungspunkt AP, ist rotationssymmetrisch bezüglich der Rotationsachse R2 des Werkstücks 50, 60, 70 und spiegelt einen Teil der Grundgeometrie der Verzahnung wieder. Der Wälzkreis W2 ist Teil der Wälzfläche der Verzahnung von Werkstück 50, 60, 70. Für die hier detailliert beschriebenen und in den Figuren gezeigten zylindrischen Verzahnungen ist die Wälzfläche ein Zylinder, für kegelige Verzahnungen ein Kegel, für plane Verzahnungen eine Ebene und für allgemeine räumliche Verzahnungen wie z.B. bei Hypoidrädern ein Hyperboloid. Die Ausführungen, die im Folgenden im Zusammenhang mit zylindrischen Verzahnungen gemacht werden, lassen sich entsprechend auf andere Verzahnungen übertragen. |
| Berührebenennormale | Die Berührebenennormale $\vec{n}$ sei derjenige im Auslegungspunkt AP verankerte Normalenvektor der Berührebene BE, der in die Verzahnung des Werkstücks 50, 60, 70 hineinzeigt, d. h. vom Kopfbereich zum Fussbereich der Verzahnung zeigt. Bei Aussenverzahnungen am Werkstück 50, 60, 70 zeigt die Berührebenennormale $\vec{n}$ somit zur Rotationsachse R2 des Werkstücks 50, 60, 70, während sie bei Innenverzahnungen von ihr wegzeigt.<br>Für zylindrische Verzahnungen zeigt die Berührebenennormale in dieselbe Richtung wie der Berührradiusvektor $\vec{r}_2$ des Werkstücks 50, 60, 70, d.h. $\vec{n}$ und $\vec{r}_2$ unterscheiden sich nur durch ihre Länge (in Fig. 14B sind daher der Berührradiusvektor $\vec{r}_2$ des Werkstücks 50 und die Berührebenennormale $\vec{n}$ gezeigt). |
| Berührebenenprojektion | Die Betrachtung von Werkstück 50, 60, 70 und Wälzschälwerkzeug 100 in Richtung des Berührradiusvektors $\vec{r}_2$ des Werkstücks 50, 60, 70 wird als Berührebenenprojektion bezeichnet.<br>In der Berührebenenprojektion schneiden sich die projizierten Rotationsachsen R1 und R2 im Auslegungspunkt AP bzw. Berührpunkt BP. |

(fortgesetzt)

| Effektiver Achskreuzwinkel | Der effektive Achskreuzwinkel $\Sigma_{eff}$ ist der von den beiden Geschwindigkeitsvektoren $\vec{v}_2$ und $\vec{v}_1$ eingeschlossene Winkel gemäß $$\cos(\Sigma_{eff}) = \frac{\vec{v}_2 \cdot \vec{v}_1}{|\vec{v}_2||\vec{v}_1|}.$$ Gemäss Erfindung gilt $-90° < \Sigma_{eff} < 90°$, $\Sigma_{eff} \neq 0°$. Der effektive Achskreuzwinkel $\Sigma_{eff}$ ist wie der Achskreuzwinkel $\Sigma$ vorzeichenbehaftet. Das Vorzeichen ist wie folgt ohne Beschränkung der Allgemeinheit festgelegt: Für Außenverzahnungen ist der effektive Achskreuzwinkel $\Sigma_{eff}$ positiv, wenn die Geschwindigkeitsvektoren $\vec{v}_1$ und $\vec{v}_2$ und die Berührebenennormale $\vec{n}$ in dieser Reihenfolge ein |
|---|---|
| | Rechtssystem bilden. Für Innenverzahnungen ist er positiv, wenn die Geschwindigkeitsvektoren $\vec{v}_1$ und $\vec{v}_2$ und die Berührebenennormale $\vec{n}$ in dieser Reihenfolge ein Linkssystem bilden. Für nicht-plane Verzahnungen entspricht der effektive Achskreuzwinkel $\Sigma_{eff}$ der senkrechten Projektion des Achskreuzwinkels $\Sigma$ auf die Berührebene BE, also dem Achskreuzwinkel $\Sigma$ in der Berührebenenprojektion. |
| Neigungswinkel | Der Neigungswinkel $\delta$ beschreibt die Neigung der Werkzeugbezugsebene und damit des Wälzschälwerkzeugs 100 bzgl. der Berührebene BE. Er ist der vom Berührradiusvektor $\vec{r}_1$ des Wälzschälwerkzeugs 100 und der Berührebenennormale $\vec{n}$ eingeschlossene Winkel gemäß $$\cos(\delta) = \frac{\vec{n} \cdot \vec{r}_1}{|\vec{n}||\vec{r}_1|}$$ mit $-90° \leq \delta \leq 90°$ (siehe Fig. 14B). Der Neigungswinkel $\delta$ ist identisch zum (betragsmäßig kleineren) Schnittwinkel zwischen der Rotationsachse R1 des Wälzschälwerkzeugs 100 und der Berührebene BE. Der Neigungswinkel $\delta$ ist 0°, wenn die Werkzeugbezugsebene senkrecht zur Berührebene BE steht und die Werkzeugrotationsachse R1 somit parallel zur Berührebene BE verläuft. Der Neigungswinkel $\delta$ ist vorzeichenbehaftet. Der Neigungswinkel $\delta$ ist positiv wenn die Rotationsachse R1 des Wälzschälwerkzeugs 100 die Berührebene BE im Spanhalbraum schneidet. Der Neigungswinkel $\delta$ ist negativ wenn die Rotationsachse R1 des Wälzschälwerkzeugs 100 die Berührebene BE im Schneidenhalbraum schneidet. |

**Weitere Projektionen:**

Es gibt verschiedene weitere Projektionen, die zur Veranschaulichung der Erfindung eingesetzt werden. Die entsprechenden Projektionen sind in der folgenden Tabelle erläutert.

| Achskreuzseitenprojektion | Der Achskreuzseitenprojektionsvektor sei derjenige zum Gemeinlot GL und zur Rotationsachse R2 des Werkstücks 50, 60, 70 senkrechte Vektor, der mit dem Geschwindigkeitsvektor $\vec{v}_2$ des berührenden Werkstückpunktes einen spitzen Winkel einschließt. Dann wird die Betrachtung von Werkstück 50, 60, 70 und Wälzschälwerkzeug 100 in Richtung dieses Achskreuzseitenprojektionsvektors als Achskreuzseitenprojektion bezeichnet. In der Achskreuzseitenprojektion verlaufen die projizierten Rotationsachsen R1 und R2 parallel zueinander. |
|---|---|
| Achskreuzrückseitenprojektion | Die Betrachtung von Werkstück 50, 60, 70 und Wälzschälwerkzeug 100 entlang des Gemeinlots GL in entgegengesetzter Richtung des Gemeinlotvektors GLV wird als Achskreuzrückseitenprojektion bezeichnet. |

(fortgesetzt)

| Berührebenenseitenprojektion | Die Betrachtung von Werkstück 50, 60, 70 und Wälzschälwerkzeug 100 in Richtung des Geschwindigkeitsvektors $\vec{v}_2$ des berührenden Werkstückspunktes wird als Berührebenenseitenprojektion bezeichnet. |
|---|---|
| Berührebenenrückseitenprojektion | Die Betrachtung von Werkstück 50, 60, 70 und Wälzschälwerkzeug 100 in entgegengesetzter Richtung des Berührradiusvektors $\vec{r}_2$ des Werkstücks 50, 60, 70 wird als Berührebenenrückseitenprojektion bezeichnet. |

**Spanflächenversatz:**

| Spanflächenversatz (nur bei Werkstücken 50, 60, 70 mit zylindrischen Verzahnungen anwendbar) | Der Spanflächenversatz e entspricht dem Abstand der Lotfußpunkte LF1 und GLF1 entlang der Rotationsachse R1 des Wälzschälwerkzeugs 100. Er ist vorzeichenbehaftet. Bei Innenverzahnungen hat der Spanflächenversatz e das selbe Vorzeichen wie der Neigungswinkel $\delta$. Bei Außenverzahnung hat der Spanflächenversatz e das entgegengesetzte Vorzeichen wie der Neigungswinkel $\delta$. |
|---|---|

Die folgende Gleichung [1] stellt für nicht-plane Verzahnungen den Zusammenhang zwischen den die räumliche Anordnung der Rotationsachsen R1 und R2 beschreibenden Winkel her und ist damit für die Umrechnung der einzelnen Größen wichtig:

$$\cos(\Sigma) = \cos(\Sigma_{eff}) \cdot \cos(\delta) \qquad\qquad [1]$$

In dieser verallgemeinerten Konstellation wird der Achskreuzwinkel $\Sigma$ in den effektiven Achskreuzwinkel $\Sigma_{eff}$ und den Neigungswinkel $\delta$ zerlegt, wobei der effektive Achskreuzwinkel $\Sigma_{eff}$ die bestimmende Größe für die Erzeugung der relativen Schnittbewegung zwischen dem sich drehenden Wälzschälwerkzeug 100 und dem sich drehenden Werkstück 50, 60, 70 ist. Für plane Verzahnungen sind der effektive Achskreuzwinkel $\Sigma_{eff}$ und der Neigungswinkel $\delta$ wohl definiert, jedoch gilt nicht der Zusammenhang [1].

**Bedingungen in der Berührebene:**

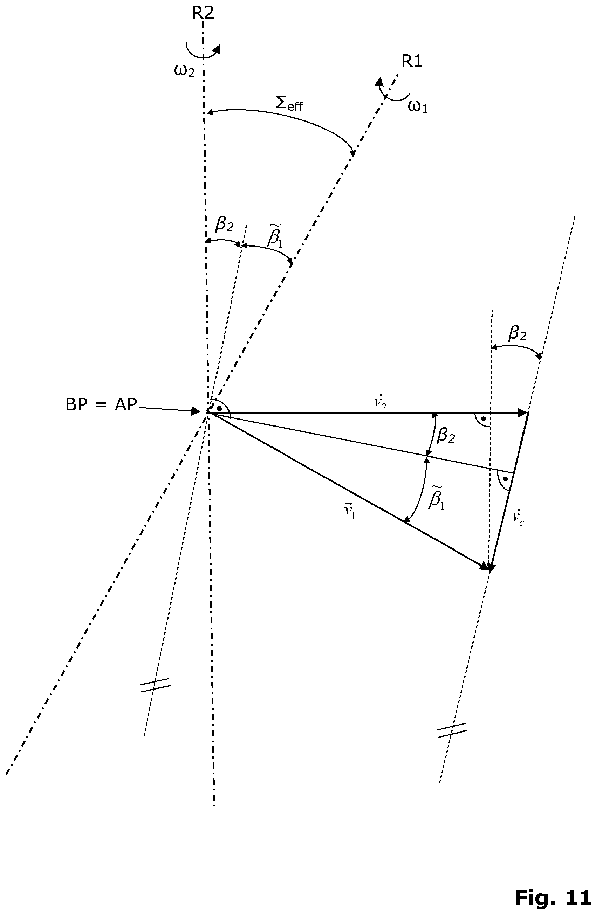

Bei der Auslegung des modifizierten Wälzschälverfahrens werden die Eingriffsbedingungen am in der Berührebene BE liegenden Auslegungspunkt AP betrachtet. Fig. 11 zeigt die Berührebene BE für eine Aussenverzahnung.

Hierbei sind

- R1 und R2 die Rotationsachsen von Wälzschälwerkzeug 100 bzw. Werkstück 50, 70,
- $\Sigma_{eff}$ der effektive Achskreuzwinkel,
- $\beta_2$ der Schrägungswinkel des Werkstücks 50, 70,
- $\tilde{\beta}_1$ der in die Berührebene BE projiziertem Schrägungswinkel $\beta_1$ eines gedachten (d.h. virtuellen) geneigten zylindrischen Wälzschälwerkzeugs 100 mit $\tan(\tilde{\beta}_1) = \tan(\beta_1) \cdot \cos(\delta)$,
- $\vec{v}_1$ und $\vec{v}_2$ die Geschwindigkeitsvektoren des Wälzschälwerkzeugs 100 bzw. Werkstücks 50, 70 im Berührpunkt BP und
- $\vec{v}_c = \vec{v}_1 - \vec{v}_2$ der resultierende Schnittgeschwindigkeitsvektor im Berührpunkt BP.

Bei der Grundauslegung des modifizierten Wälzschälprozesses wird der Wälzkreisdurchmesser $d_{w1}$ des Wälzschälwerkzeugs 100 idealerweise derart festgelegt, dass der resultierenden Schnittgeschwindigkeitsvektor $\vec{v}_c$ in Richtung der zu erzeugenden Lücke zeigt. Mit anderen Worten soll er, wie in Fig. 11 gezeigt, mit der projizierten Rotationsachse R2 den Schrägungswinkel $\beta_2$ des Werkstücks 50, 70 einschließen. Diese Bedingung ist erfüllt, wenn der Wälzkreisdurchmesser $d_{w1}$ folgender Formel genügt:

$$d_{w1} = d_{w2} \cdot \frac{n_2}{n_1} \cdot \frac{\cos(\beta_2)}{\cos(\widetilde{\beta_1})} = d_{w2} \cdot \frac{n_2}{n_1} \cdot \frac{\cos(\beta_2)}{\cos(\Sigma_{\mathit{eff}} - \beta_2)}$$

Hierbei bezeichnen $n_1$ und $n_2$ die Drehzahlen von Wälzschälwerkzeug 100 bzw. Werkstück 50, 70, welche dem Zähnezahlverhältnis gemäß

$$\frac{n_2}{n_1} = -\frac{z_1}{z_2}$$

genügen müssen. Hierbei bezeichnen z1 und z2 die Zähnezahlen von Wälzschälwerkzeug 100 bzw. Werkstück 50, 60, 70.

Die Schnittgeschwindigkeit ergibt sich dann zu

$$v_c = \pi \cdot d_{w2} \cdot n_2 \cdot \frac{\sin(\Sigma_{\mathit{eff}})}{\cos(\widetilde{\beta_1})} = \pi \cdot d_{w2} \cdot n_2 \cdot \frac{\sin(\Sigma_{\mathit{eff}})}{\cos(\Sigma_{\mathit{eff}} - \beta_2)}$$

und der Schrägungswinkel $\beta_1$ eines gedachten geneigten zylindrischen Wälzschälwerkzeugs 100 muss der Bedingung

$$\tan(\beta_1) = \tan(\Sigma_{\mathit{eff}} - \beta_2) / \cos(\delta)$$

genügen. In allen drei Formeln geht der effektive Achskreuzwinkel $\Sigma_{\mathit{eff}}$ ein, welcher sich bei geneigtem Werkzeug vom Achskreuzwinkel $\Sigma$ gemäß der bereits erwähnten Formel [1]

$$\cos(\Sigma) = \cos(\Sigma_{\mathit{eff}}) \cdot \cos(\delta) \qquad\qquad [1]$$

unterscheidet.

Wie ebenfalls bereits erwähnt, ist dieser Unterschied für betragsmäßig relativ kleine Neigungswinkel $\delta$ bis zu betragsmäßig ca. 10° vernachlässigbar. Deshalb kann für derartige kleine Neigungswinkel $\delta$ eine Auslegung der Werkzeuggrundgeometrie auch in ungeneigter Achslage erfolgen. In diesem Falle ist in obigen Formeln $\Sigma_{\mathit{eff}} = \Sigma$ und $\delta = 0$ zu setzen. Diese Vorgehensweise entspricht dem bisher üblichen Weg.

Für betragsmäßig größere Neigungswinkel $\delta$ ist der Unterschied zwischen effektivem Achskreuzwinkel $\Sigma_{\mathit{eff}}$ und Achskreuzwinkel $\Sigma$ nicht mehr vernachlässigbar, wenn die Auslegung zu akzeptablen Schnittbedingungen führen soll. Dann muss die Auslegung anhand obiger Formeln erfolgen.

Gemäss Erfindung ist der Neigungswinkel $\delta$ betragsmäßig stets grösser gleich 15 Grad, d.h. die Neigung der Werkzeugbezugsebene und damit des Wälzschälwerkzeugs 100 bezüglich der Berührebene (die durch die beiden Geschwindigkeitsvektoren $\vec{v}_2$ und $\vec{v}_1$ aufgespannt wird) ist deutlich negativ oder deutlich positiv. Daher ist im Zusammenhang mit der vorliegenden Erfindung entweder von einem deutlichen Hinneigen oder von einem deutlichen Wegneigen des Wälzschälwerkzeugs 100 bezüglich des Werkstücks 50, 60, 70 die Rede.

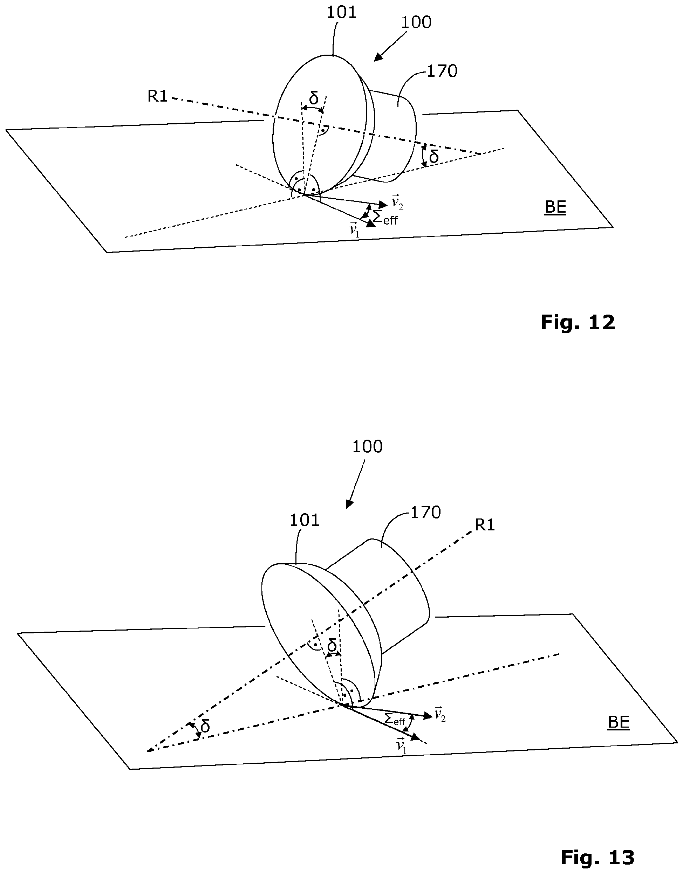

Fig. 12 zeigt eine schematische Ansicht eines konischen Wälzschälwerkzeugs 100 in Bezug zur sogenannten Berührebene BE. Die Darstellung des Hinneigens gegenüber der Berührebene BE gemäss Fig. 12 ist besonders anschaulich.

Fig. 13 zeigt eine schematische Ansicht eines konischen Wälzschälwerkzeugs 100 in Bezug zur sogenannten Berührebene BE. Die Darstellung des Wegneigens gegenüber der Berührebene BE gemäss Fig. 13 ist besonders anschaulich.

Anhand der Fig. 12 und Fig. 13 kann die Lage des Neigungswinkels $\delta$ gut verdeutlicht werden.

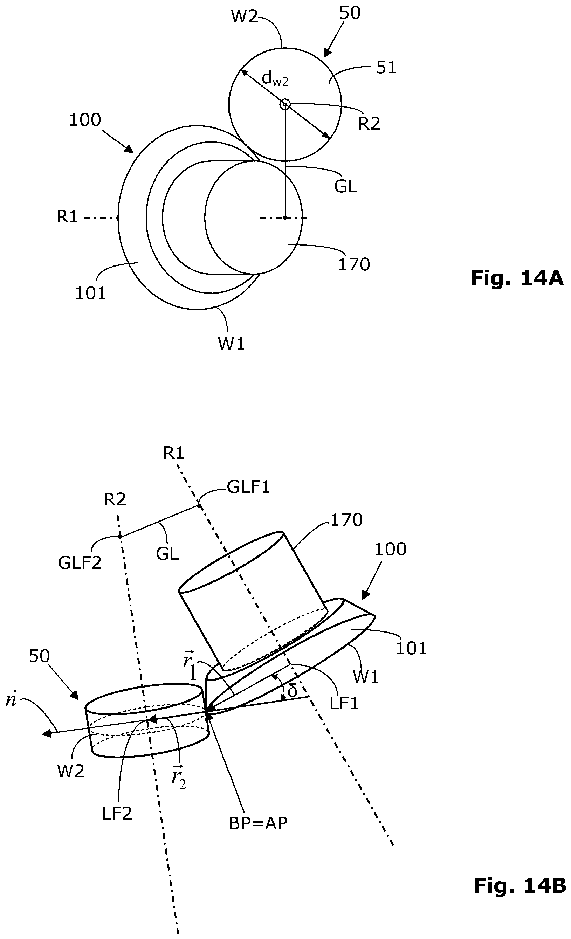

Der Auslegungspunkt AP bzw. der Berührpunkt BP liegen bei einem negativen Neigungswinkel $\delta$ nicht auf dem Gemeinlot GL, wie man z.B. in Fig. 14B erkennen kann. Das Gemeinlot GL liegt bei Außenverzahnungen im Schneidenhalbraum, bei Innenverzahnungen im Spanhalbraum. Die Berührebene BE steht senkrecht zur Werkstückbezugsebene, aber nicht zur Werkzeugbezugsebene. Die Rotationsachse R2 des Werkstücks 50, 60, 70 ist parallel zur Berührebene BE. Jedoch schneidet die Rotationsachse R1 des Wälzschälwerkzeugs 100 die Berührebene BE im Schneidenhalbraum. Bei einem Werkstück 50, 60, 70 mit zylindrischer Verzahnung schließen die Berührradiusvektoren $\vec{r}_1$ und $\vec{r}_2$ den Neigungswinkel $\delta$ ein, wie man z.B. in Fig. 14B erkennen kann. Allgemeiner kann formuliert werden, dass der Neigungswinkel $\delta$ derjenige Winkel ist, der vom Berührradiusvektor $\vec{r}_1$ des Wälzschälwerkzeugs 100 und der Berührebenennormale $\vec{n}$ eingeschlossen ist. Es sei anzumerken, dass die Zusammenhänge, die in diesem Absatz beschrieben wurden, nur für das Hinneigen des Werkzeugs 100 gelten.

Anhand der oben dargestellten Tabellen und Formeln können entsprechende Zusammenhänge auch für das Wegneigen des Werkzeugs 100 ermittelt werden.

Vorzugsweise liegt bei allen Ausführungsformen der effektive Achskreuzwinkel $\Sigma_{eff}$ im folgenden Bereich: - 60° $\leq \Sigma_{eff} \leq$ 60°.

Gemäss Erfindung ist beim Hinneigen der Spanflächenversatz e bei zylindrischen Innenverzahnungen negativ und bei zylindrischen Außenverzahnungen positiv. Beim Wegneigen ist das Vorzeichen des Spanflächenversatzes e umgekehrt. Die Freiwinkel müssen gemäss Erfindung beim Hinneigen konstruktiv am Wälzschälwerkzeug 100 angebracht werden. Hierbei muss zusätzlich der durch das Neigen der Werkzeugschneiden zum zylindrischen Bauteil (d.h. zum Werkstück 50, 60, 70) verursachte Freiwinkelverlust kompensiert werden. Beim Wegneigen müssen konstruktive Freiwinkel nicht unbedingt vorgesehen werden.

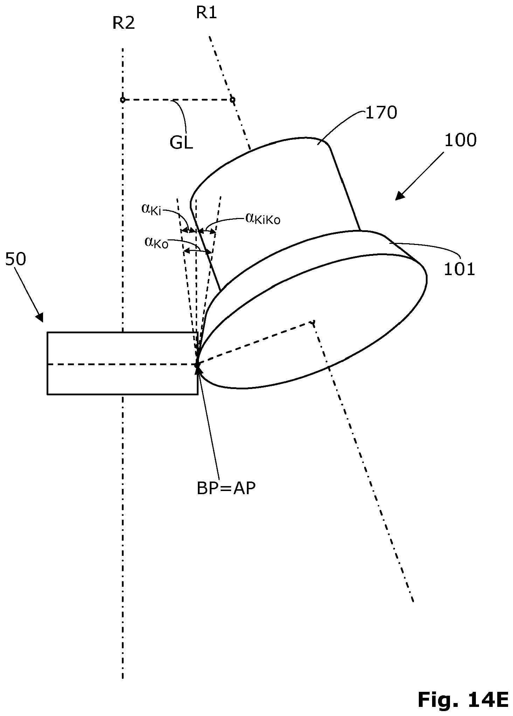

Die Berührebenenseitenprojektion in Fig. 14E zeigt den kinematisch-konstruktiv erzielten Kopffreiwinkel $\alpha_{KiKo}$ als Summe aus kinematisch erzeugtem negativem Freiwinkel $\alpha_{Ki}$ und konstruktivem Werkzeugfreiwinkel $\alpha_{Ko}$ für ein hingeneigtes Wälzschälwerkzeug 100.

Gemäss Erfindung geht es um ein sogenanntes modifiziertes Wälzschälverfahren zum Wälzschälen eines Werkstücks 50, 60, 70, wobei an dem Werkstück 50, 60, 70 eine rotationssymmetrische, periodische Struktur, z.B. eine Aussen- oder Innenverzahnung, unter Einsatz eines Wälzschälwerkzeugs 100 hergestellt werden soll.

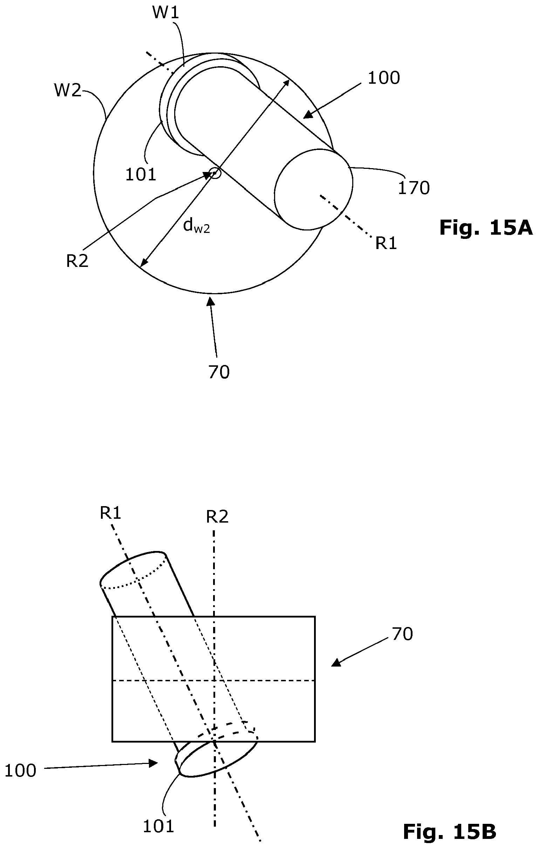

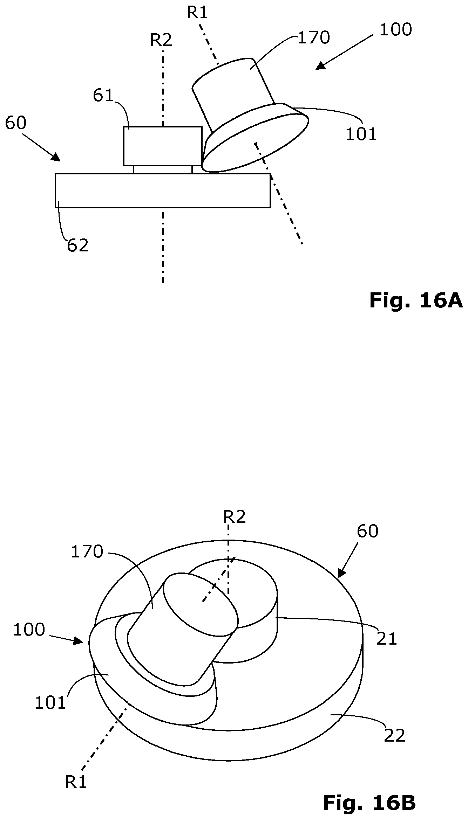

Das modifizierte Wälzschälverfahren, wie in den Figuren 14A bis 14E und anhand zweier weiterer Beispiele in den Figuren 15A und 15B sowie 16A und 16B gezeigt (diese Figuren sind schematische Zeichnungen, die Wälzkörper zeigen), zeichnet sich insbesondere dadurch aus, dass das Wälzschälwerkzeug 100 eine Kollisionskontur hat, die sich nach hinten so verjüngt, dass Kollisionen mit dem Werkstück 50, 60, 70 beim Wälzschälen vermieden werden. Diese Vorgabe gilt für das deutliche Hinneigen zum Werkstück 50, 70, d.h. sie gilt für betragsmäßig grosse negative Neigungswinkel $\delta$.

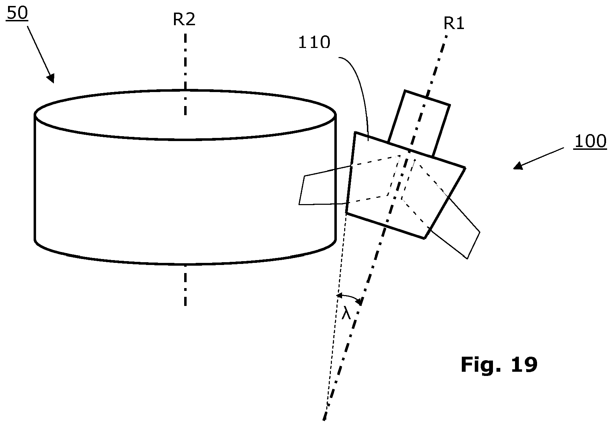

Beim deutlichen Wegneigen vom Werkstück 50, 60, 70, d.h. bei grossen positiven Neigungswinkeln $\delta$, hat das Wälzschälwerkzeug 100 vorzugsweise eine Kollisionskontur, die umgekehrt verläuft zur Kollisionskontur eines stark hingeneigten Wälzschälwerkzeugs 100, wie in Fig. 19 anhand eines schematischen Beispiels zu erkennen ist. Der Konuswinkel $\lambda$ wurde in Fig. 19 so gewählt, dass die Mantelfläche des Grundkörpers 110 in etwa parallel zur Zylindermantelfläche des Werkstücks 50 verläuft.

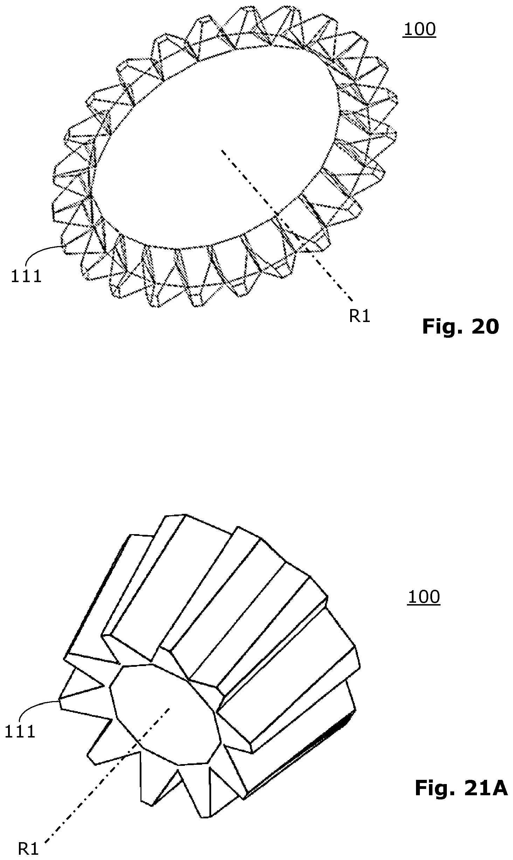

Fig. 20 zeigt ein weiteres Wälzschälwerkzeug 100, das im Zusammenhang mit der Erfindung eingesetzt werden kann. Das gezeigte Wälzschälwerkzeug 100 hat die Form eines Schneidrads. Es handelt sich hier um ein Vollwerkzeug, bei dem die Schneidzähne 111 Teil des Wälzschälwerkzeugs 100 sind. Das Wälzschälwerkzeug 100 weist hier 24 Schneidzähne 111 auf, von denen in Fig. 20 einer mit einem Bezugszeichen versehen ist. Der Grundkörper des Wälzschälwerkzeugs 100 hat die Form einer Kegelstumpfscheibe oder eines kegelstumpfförmigen Tellers.

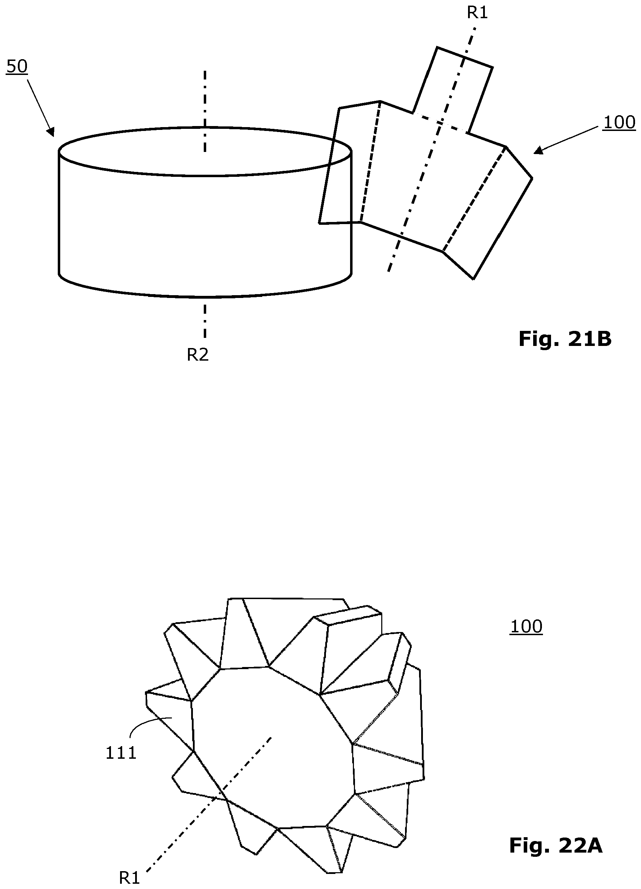

Fig. 21A zeigt ein weiteres Wälzschälwerkzeug 100, das im Zusammenhang mit der Erfindung eingesetzt werden kann. Die Spanflächen der Schneidzähne 111 sind hier auf einer Kegelfläche (ggf. verkippt) angeordnet. Fig. 21B zeigt das Wälzschälwerkzeug 100 nach Fig. 21A im Eingriff mit einem zylindrischen Werkstück 50. Das Wälzschälwerkzeug 100 ist hier mit einem deutlichen Neigungswinkel $\delta$ vom Werkstück 50 weggeneigt. Der Neigungswinkel $\delta$ beträgt hier ca. 20 Grad.

Das in den Figuren 21A und 21B gezeigte Wälzschälwerkzeug 100 hat die Form eines geradverzahnten Kegelrades, wobei die Zähne dieses Kegelrades die Schneidzähne 111 darstellen. Die Spanflächen befinden sich an der Stirnseite mit dem kleineren Durchmesser. Genauer gesagt, sind die Spanflächen am Ergänzungskegel, d.h. auf einer Kegelfläche (ggf. bezüglich dieser verkippt) angeordnet.

Der Schrägungswinkel des dargestellten Wälzschälwerkzeugs 100 beträgt 0 Grad. Für Schrägungswinkel ungleich 0 Grad hat ein entsprechendes Wälzschälwerkzeug 100 die Grundform eines schrägverzahnten Kegelrades.

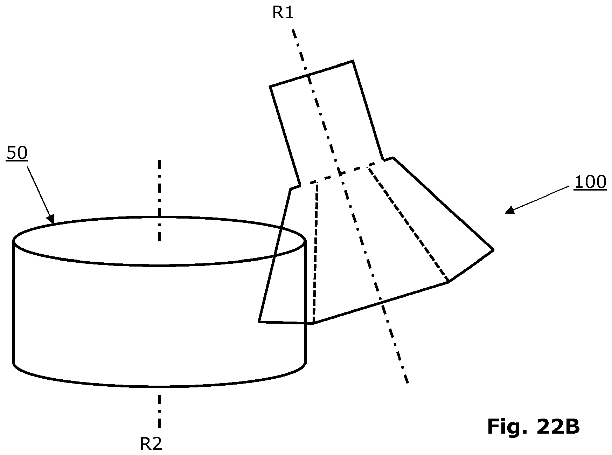

Fig. 22A zeigt ein weiteres Wälzschälwerkzeug 100, das im Zusammenhang mit der Erfindung eingesetzt werden kann. Die Spanflächen der Schneidzähne 111 sind hier auf einer Kegelfläche (ggf. verkippt) angeordnet. Fig. 22B zeigt das Wälzschälwerkzeug 100 nach Fig. 22A im Eingriff mit einem zylindrischen Werkstück 50. Das Wälzschälwerkzeug 100 ist hier mit einem deutlichen Neigungswinkel $\delta$ zum Werkstück 50 hingeneigt. Der Neigungswinkel $\delta$ beträgt hier ca. -18 Grad.

Das in den Figuren 22A und 22B gezeigte Wälzschälwerkzeug 100 hat die Form eines geradverzahnten Kegelrades, wobei die Zähne dieses Kegelrades die Schneidzähne 111 darstellen. Die Spanflächen befinden sich an der Stirnseite mit dem größeren Durchmesser. Genauer gesagt, sind die Spanflächen am Ergänzungskegel, d.h. auf einer Kegelfläche (ggf. bezüglich dieser verkippt) angeordnet.

Der Schrägungswinkel des dargestellten Werkzeugs 100 beträgt Null Grad. Für Schrägungswinkel ungleich Null Grad hat ein entsprechendes Wälzschälwerkzeug 100 die Grundform eines schrägverzahnten Kegelrades.

Vorzugsweise hat das Wälzschälwerkzeug 100 jeweils eine kegelförmige, respektive konische oder hyperbolische Kollisionskontur.

Während der Wälzschälbearbeitung werden die folgenden Schritte zeitgleich und koordiniert ausgeführt:

- gekoppeltes Ausführen einer Relativbewegung des Wälzschälwerkzeugs 100 in Bezug zu dem Werkstück 50, 70,
- Drehen des Wälzschälwerkzeugs 100 um eine erste Rotationsachse R1 und Drehen des Werkstücks 50, 70 um eine zweite Rotationsachse R2, wobei
- während dem Wälzschälen ein positiver oder ein negativer Neigungswinkel $\delta$ des Wälzschälwerkzeugs 100 eingestellt ist, dessen Betrag grösser gleich 15 Grad ist, und
- die erste Rotationsachse R1 windschief zur zweiten Rotationsachse R2 verläuft, bzw. die beiden Rotationsachsen R1, R2 windschief relativ zueinander angestellt sind.

In Fig. 14A ist eine schematische Ansicht eines geeigneten Wälzschälwerkzeugs 100 mit sich nach hinten verjüngender (hier konischer) Kollisionskontur beim modifizieren Wälzschälen eines außenverzahnten zylinderförmigen Werkstücks 50 gezeigt. Es gilt in diesem Beispiel: $\delta$ = - 20 Grad und Konuswinkel = 30 Grad. Das Wälzschälwerkzeug 100 ist somit deutlich zum Werkstück 50 hingeneigt. Fig. 14A zeigt eine Draufsicht auf des zylinderförmigen Werkstücks 50. Die Stirnfläche 51 des Werkstücks 50 liegt in der Zeichenebene. Das Wälzschälwerkzeug 100 wird von einer Werkzeugspindel 170 gehalten, die in den Figuren schematisch dargestellt ist.

Fig. 14B zeigt eine weitere Ansicht der Konstellation nach Fig. 14A. In Fig. 14B sind das Gemeinlot GL und der Berührpunkt BP der Wälzkreise W1, W2 des Wälzschälwerkzeugs 100 und des Werkstücks 50 zu erkennen. Der Berührpunkt BP liegt am Berührpunkt des Wälzkreises W1 des Wälzschälwerkzeugs 100 mit dem Radiusvektor $\vec{r}_1$ und des Wälzkreises W2 des Werkstücks 50 mit dem Radiusvektor $\vec{r}_2$.

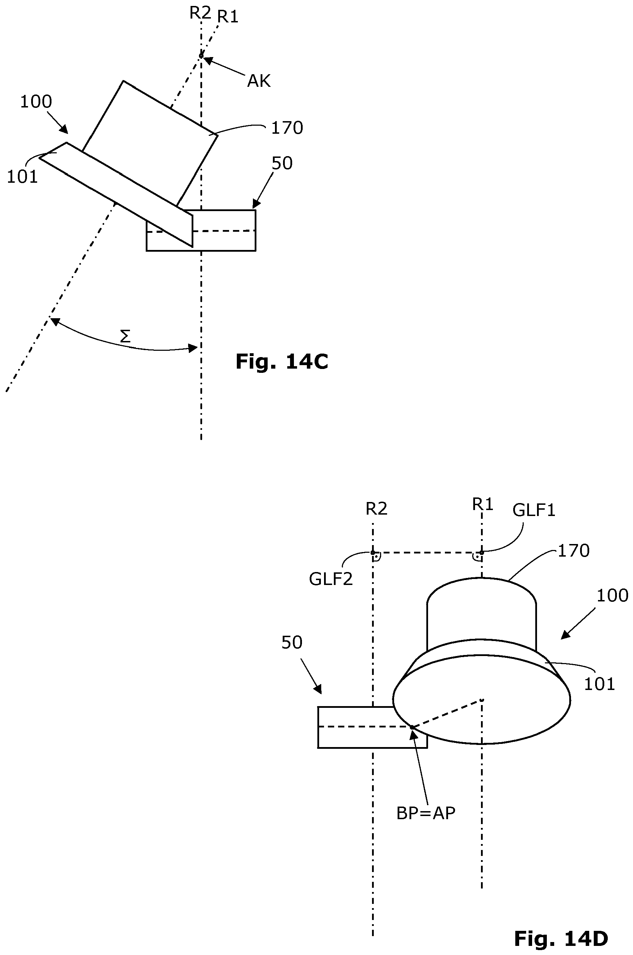

Fig. 14C zeigt eine Achskreuzprojektion der Konstellation nach Fig. 14A. In Fig. 14C ist der Achskreuzwinkel $\Sigma$ zu erkennen. Das Gemeinlot GL steht senkrecht zur Zeichenebene von Fig. 14C und ist deshalb zum Achskreuzpunkt AK reduziert.

Fig. 14D zeigt eine Achskreuzseitenprojektion der Konstellation nach Fig. 14A. In Fig. 14D liegen die Projektionen der beiden Achsen R1, R2 parallel in der Zeichenebene. Das Gemeinlot GL liegt auch in der Zeichenebene.

Fig. 14E zeigt eine Berührebenenseitenprojektion der Konstellation nach Fig. 14A. Bei der Darstellung in Fig. 14E handelt es sich um eine Ansicht, die den Berührpunkt BP der Wälzkreise W1, W2 und das deutliche Hinneigen des Werkzeugs zum Werkstück zeigt.

Vorzugsweise liegt der Neigungswinkel $\delta$ betragsmäßig bei allen Ausführungsformen in einem Bereich zwischen 15 und 45 Grad. Besonders bevorzugt ist ein Winkelbereich zwischen betragsmäßig 20 und 35 Grad.

Die sich verjüngende Kollisionskontur des Wälzschälwerkzeugs 100 ist in den Figuren 14A bis 14E durch einen konischen Grundkörper realisiert. Der Grundkörper des Wälzschälwerkzeugs 100 kann aber auch eine andere sich verjüngende Form haben, um Kollisionen zu vermeiden. Bei negativem Neigungswinkel $\delta$ verjüngt sich die Kollisionskontur nach hinten und bei positivem Neigungswinkel $\delta$ verjüngt sich die Kollisionskontur nach vorne, wobei diese sich verjüngende Kollisionskontur bei positivem Neigungswinkel $\delta$ optional ist. Bei negativem Neigungswinkel $\delta$ hingegen ist die sich nach hinten verjüngende Kollisionskontur zwingend notwendig.

Der Konuswinkel des konischen Grundkörpers des Wälzschälwerkzeugs 100 beträgt hier beispielhafte 30 Grad. Der Konuswinkel kann auch andere Werte annehmen, solange unter Berücksichtigung des Neigungswinkels $\delta$ und anderer Vorgaben ein positiver effektiver Kopffreiwinkel im Bereich der Schneiden des Wälzschälwerkzeugs 100 sicher gestellt ist.

In Fig. 15A ist eine Ansicht eines zylindrischen Wälzschälwerkzeugs 100 (hier im Form eines Schälrüssels) beim modifizierten Wälzschälen eines innenverzahnten zylindrischen Werkstücks 70 gezeigt, wobei das Wälzschälwerkzeug 100 deutlich vom Werkstück 70 weggeneigt ist (Neigungswinkel $\delta$ = 20 Grad). Das Werkstück 70 ist das selbe wie bei den Kollisionsbetrachtungen im einleitenden Teil der Beschreibung. Der entsprechende Innenring 71 ist in Fig. 15A in der Draufsicht nur als Kreis dargestellt. Fig. 15B zeigt eine schematische Berührebenenrückseitenansicht des Werkstücks 70 zusammen mit dem Wälzschälwerkzeug 100. In der gezeigten Konstellation kommt es, anders als z.B. in den Figuren 7A bis 8B, trotz der beengten Platzverhältnisse im Innenring 71 des Werkstücks 70 zu keiner Kollision mehr. Anhand des in den Figuren 15A, 15B gezeigten Beispiels ist zu erkennen, dass das deutliche Wegneigen insbesondere beim Bearbeiten von Innenverzahnungen oder anderen innenliegenden periodischen Strukturen an Werkstücken 70 mit Innenring besonders geeignet ist, wenn der Innenring ein Verhältnis von Innendurchmesser zur erforderlichen Eintauchtiefe des Schälrüssels respektive des Wälzschälwerkzeugs 100 in das Werkstück 70 aufweist, das kleiner ist als 2. Das modifizierte Wälzschälverfahren eignet sich auch für Innenverzahnungen, die tiefer im Inneren eines Innenring liegen. Der Begriff Eintauchtiefe schließt nicht nur die Zahnbreite mit ein, sondern berücksichtigt die Gesamtkonstellation, respektive die axiale Position der Verzahnung im Innenring.

Entsprechend der Erfindung kann man, je nach Konstellation, auch durch das deutliche negative Neigen Kollisionen vermeiden, wie anhand der Figuren 16A und 16B erläutert wird. In Fig. 16A ist eine schematische Ansicht eines geeigneten Wälzschälwerkzeugs 100 mit sich nach hinten verjüngender (hier konischer) Kollisionskontur beim modifizieren Wälzschälen eines außenverzahnten zylinderförmigen Werkstücks 60 gezeigt. Das Werkstück 60 entspricht dem in den Figuren 9A und 9B gezeigten Werkstück 20 gezeigt. Das Werkstück 60 umfasst einen ersten zylindrischen Abschnitt 61 und einen zweiten zylindrischen Abschnitt 62, wobei am ersten zylindrischen Abschnitt 61 eine Aussenverzahnung mittels Wälzschälen unter Einsatz eines konischen Wälzschälwerkzeugs 100 gefertigt werden soll. Es gilt in diesem Beispiel: $\Sigma_{eff}$ = 18 Grad, $\delta$ = - 24 Grad, und Konuswinkel = 34 Grad. Das Wälzschälwerkzeug 100 ist somit deutlich zum Werkstück 60 hingeneigt. Fig. 16B zeigt eine weitere schematische Ansicht des konischen Wälzschälwerkzeugs 100 und Werkstücks 60 nach Fig. 16A.

Vorzugsweise hat das Wälzschälwerkzeug 100 bei allen Ausführungsformen mit deutlich negativem Neigungswinkel $\delta$ eine Mantelform oder Grundform mit einer Kollisionskontur, die sich nach hinten verjüngt. Zu diesem Zweck kann die Mantelform oder Grundform z.B. aus einem zylindrischen Teil und einem kegelstumpfförmigen (konischen) Teil zusammengesetzt sein. Vorzugsweise weist mindestens der schälradartige Bereich 101 des Wälzschälwerkzeugs 100 eine sich verjüngende Kollisionskontur auf, wie z.B. in den Figuren 12, 13, 14A bis 14E, , 16A, 16B, 18A, 18B, 20, 22A und 22B gezeigt.

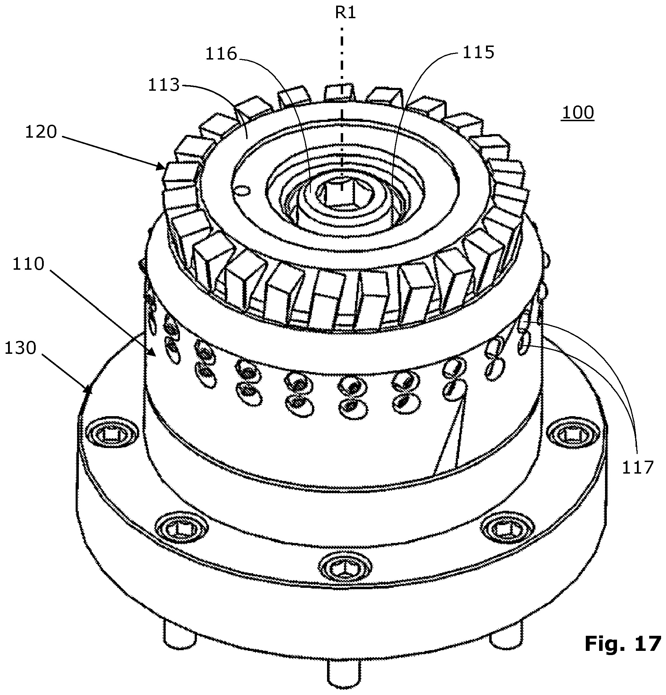

In Fig. 17 ist eine bevorzugte Ausführungsform eines Wälzschälwerkzeugs 100 gezeigt, das beim deutlichen Wegneigen von ca. 16 Grad eingesetzt werden kann. Das Wälzschälwerkzeug 100 ist speziell zum Herstellen einer rotationssymmetrischen, periodischen Struktur an einem Werkstück 50, 70 (z.B. in einer Konstellation wie in Fig. 2 gezeigt) unter Anwendung des modifizierten Wälzschälverfahrens ausgelegt. Das Wälzschälwerkzeug 100 umfasst einen zylinderförmigen und/oder kegelförmigen Grundkörper 110 mit einer zentralen Rotationsachse R1. Der Grundkörper 110 weist eine Mehrzahl von Aufnahmeöffnungen 112 auf. In Fig. 17 ist eine Konfiguration gezeigt, bei der alle Aufnahmeöffnungen 112 mit Messerstäben 120 bestückt sind. Im gezeigten Beispiel ist das Wälzschälwerkzeug 100 mit 23 Messerstäben 120 bestückt. Die Aufnahmeöffnungen 112 erstrecken sich ausgehend von der Einsatzöffnung an der werkstückseitigen Stirnfläche 113 schräg ins Innere des Grundkörpers 110. Von der werkstückseitigen Stirnseite 113 des Grundkörpers 110 aus kann z.B. eine Schraube 116 durch eine entsprechende Zentralbohrung 115 des Grundkörpers 110 hindurch in ein Innengewinde der Werkzeugspindel 170 geschraubt werden, um das Wälzschälwerkzeug 100 an der Werkzeugspindel 170 zu befestigen.

Vorzugsweise zeichnet sich das Wälzschälwerkzeug 100 bei allen Ausführungsformen dadurch aus, dass an dem Grundkörper 110 pro Messerstab 120 ein oder zwei Durchgangslöcher 117 in der Mantelfläche vorgesehen sind. Diese Durchgangslöcher 117 sind zum Befestigen der Messerstäbe 120 in dem Grundkörper 110 ausgelegt.

Das Wälzschälwerkzeug 100 kann zusätzlich zu dem Grundkörper 110 einen Adapter 130 umfassen, wie in Fig. 17 angedeutet.

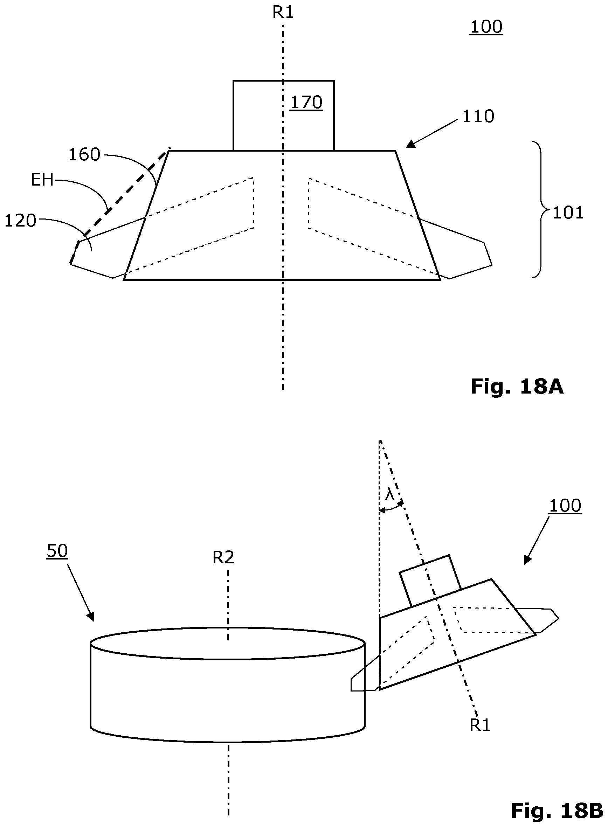

In Fig. 18A ist eine stark schematisierte Ansicht eines sich konisch verjüngenden Wälzschälwerkzeugs 100 gezeigt, das im Zusammenhang der Erfindung bei einem Neigungswinkel $\delta$ von -20 Grad eingesetzt werden kann. Wie in der schematischen Darstellung in Fig. 18A gezeigt, handelt es sich bei dem Wälzschälwerkzeug 100 um ein sogenanntes Messerkopfwerkzeug, das einen Messerkopfgrundkörper 110 (hier mit einem kegelstumpfförmigen (konischen) Teil 160) hat, der mit Messereinsätzen, vorzugsweise in Form von Stabmessern 120, bestückt ist. Das Wälzschälwerkzeug 100 wird mittels einer Werkzeugspindel 170, die hier stark schematisiert gezeigt ist, bewegungstechnisch mit einer Maschine 200 befestigt. Der Konuswinkel $\lambda$ wurde in Fig. 18A und 18B so gewählt, dass die Mantelfläche des Grundkörpers 110 respektive des kegelstumpfförmigen (konischen) Teils 160 in etwa parallel zur Zylindermantelfläche des Werkstücks 50 verläuft.

FIG. 18B zeigt eine stark schematisierte Ansicht des Wälzschälwerkzeugs 100 nach Fig. 18A zusammen mit einem zylindrischen Werkstück 50, wobei ein Neigungswinkel $\delta$ von -20 Grad vorgegeben ist. Das Wälzschälwerkzeug 100 hat eine Kollisionskontur, die so gewählt wurde, dass es trotz des deutlichen Hinneigens mit $\delta$ = -20 Grad zu keiner Kollision des Wälzschälwerkzeugs 100 mit dem Werkstück 50 kommt.

Das Wälzschälwerkzeug 100 kann aber eine andere Form haben, wie z.B. in Fig. 20 andeutungsweise gezeigt. In Fig. 20 ist ein Wälzschälwerkzeug 100 gezeigt, das die Form eines Schneidrads hat. Es handelt sich hier um ein Vollwerkzeug, bei dem die Schneidzähne 111 Teil des Wälzschälwerkzeugs 100 sind. Das Wälzschälwerkzeug 100 weist hier 24 Schneidzähne 111 auf, von denen in Fig. 20 einer mit einem Bezugszeichen versehen ist. Der Grundkörper des Wälzschälwerkzeugs 100 hat die Form einer Kegelstumpfscheibe oder eines kegelstumpfförmigen Tellers.

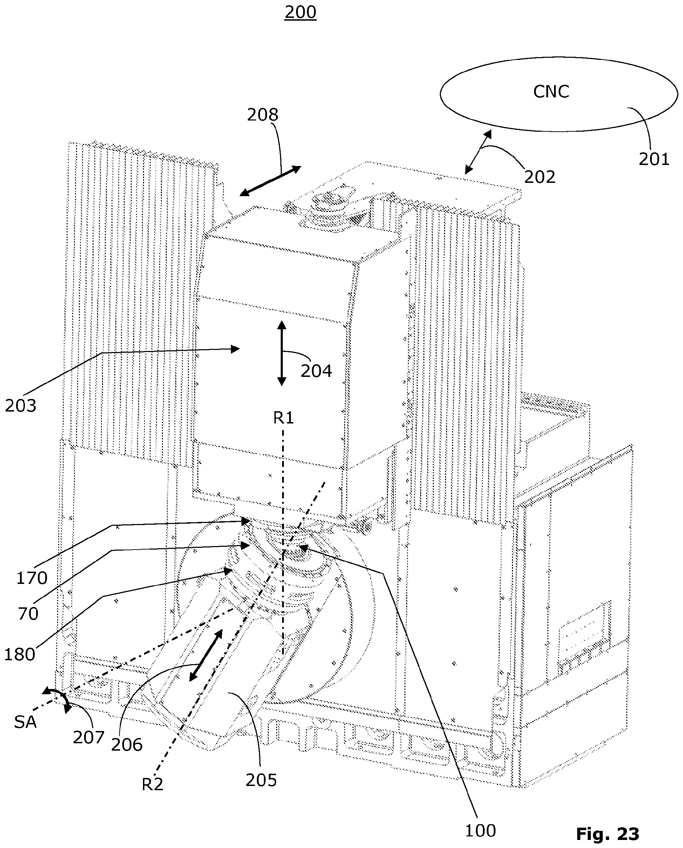

Eine Maschine 200, die zum erfindungsgemässen Wälzschälen ausgelegt ist, weist eine CNC-Steuerung 201 auf, die eine Koppelung der Achsen R1 und R2, respektive eine Koordination der Achsbewegungen ermöglicht. Die CNC-Steuerung 201 kann Teil der Maschine 200 sein, oder sie kann extern ausgeführt und zur kommunikationstechnischen Verbindung 202 mit der Maschine 200 ausgelegt sein. Die entsprechende Maschine 200 umfasst einen sogenannten "elektronischen Getriebezug", respektive eine "elektronische oder steuerungstechnische Achskopplung" um eine Relativbewegung des Wälzschälwerkzeugs 100 in Bezug zu dem innenverzahnten, wälzgeschälten Werkstück 70 auszuführen. Das gekoppelte Bewegen des Wälzschälwerkzeugs 100 und des Werkstücks 70 wird so ausgeführt, dass sich während der Bearbeitungsphase eine Relativbewegung zwischen dem Wälzschälwerkzeug 100 und dem Werkstück 70 ergibt, die der Relativbewegung eines Schraubradgetriebes entspricht. Der elektronische Getriebezug, respektive die elektronische oder steuerungstechnische Achskopplung sorgen für eine Drehzahlsynchronisierung von mindestens zwei Achsen der Maschine 200. Hierbei sind mindestens die Rotationsachse R1 der Werkzeugspindel 170 mit der Rotationsachse R2 der Werkstückspindel 180 gekoppelt. Ausserdem ist vorzugsweise bei allen Ausführungsformen die Rotationsachse R2 der Werkstückspindel 170 mit dem Axialvorschub 203 in Richtung R1 gekoppelt. Die Bewegung des Axialvorschubs 203 ist in Fig. 23 durch einen Doppelpfeil 204 dargestellt. Zusätzlich kann die Werkstückspindel 180 mittels eines Schlittens 205 parallel zur Rotationsachse R2 linear verschoben werden, wie durch einen Doppelpfeil 206 dargestellt. Ausserdem kann der Schlitten 205 samt Werkstückspindel 180 und Werkstück 170 um eine Schwenkachse SA gedreht werden, wie durch einen Doppelpfeil 207 dargestellt.

Vorzugsweise kommt eine Maschine 200 zum Einsatz, die auf einer Vertikalanordnung basiert, wie in Fig. 23 gezeigt. Bei einer solchen Vertikalanordnung sitzt entweder das Wälzschälwerkzeug 100 samt Werkzeugspindel 170 oberhalb des Werkstücks 50, 60, 70 samt Werkstückspindel 180, oder umgekehrt. Die Späne, die beim Wälzschälen entstehen, fallen aufgrund der Schwerkraftwirkung nach unten und können z.B. über ein Spanbett, das nicht gezeigt ist, entfernt werden.

Weiterhin sorgt eine Maschine 200, die zum erfindungsgemässen modifizierten Wälzschälen ausgelegt ist, für die richtigen komplexen geometrischen und kinematischen Maschineneinstellungen und Achsbewegungen der genannten Achsen. Vorzugsweise hat die Maschine bei allen Ausführungsformen sechs Achsen. Fünf dieser Achsen wurden bereits beschrieben. Als sechste Achse kann eine Achse vorgesehen sein, die eine lineare Relativbewegung des Werkstücks 50, 60, 70 gegenüber dem Wälzschälwerkzeug 100 ermöglicht. Diese lineare Relativbewegung ist in Fig. 23 durch den Doppelpfeil 208 angedeutet.

Das modifizierte Wälzschälverfahren kann bei allen Ausführungsformen trocken oder nass angewendet werden, wobei das Trocken-Wälzschälen bevorzugt ist.

Das Werkstück 50, 60, 70 kann bei allen Ausführungsformen vorverzahnt (z.B. ein grob verzahntes Werkstück) oder unverzahnt sein. Bei einem unverzahnten Werkstück arbeitet das Wälzschälwerkzeug 100 ins volle Material.

Das Werkstück 50, 60, 70 kann bei allen Ausführungsformen nachbearbeitet, vorzugsweise durch Anwendung eines Schlichtverfahrens, werden.

Das hier beschriebene und beanspruchte modifizierte Wälzschälen bietet eine hohe Produktivität und Flexibilität.

Das Einsatzspektrum des modifizierten Wälzschälens ist groß und erstreckt sich auf die Herstellung rotationssymmetrischer periodischer Strukturen.

Das hier beschriebene modifizierte Wälzschälen ermöglicht hohe Materialabtragsraten. Gleichzeitig ermöglicht es günstige Oberflächenstrukturen auf Zahnflanken und anderen bearbeiteten Oberflächen zu erzielen.

Beim modifizierten Wälzschälen wird Material am Werkstück 50, 60, 70 fortschreitend abgetragen, bis die Zähne, respektive die Zahnlücken oder andere periodische Strukturen vollständig ausgebildet sind.

Bei dem modifizierten Wälzschälen handelt es sich um ein Hochleistungsverfahren, das erhebliche Potentiale in der Bearbeitungszeit hat. Zusätzlich zu den geringeren Taktzeiten sind die Werkzeugkosten relativ niedrig. Alle diese Aspekte tragen zu der besonderen Wirtschaftlichkeit des modifizierten Wälzschälens bei.

| Stossrad | 1 |
| --- | --- |
| Werkstück | 2 |
| Zahnkopf | 4 |
| Zahnbrust | 5 |
| | |
| Wälzschälwerkzeug | 10 |
| (wälzgeschältes aussenverzahntes) Werkstück | 20 |
| erster zylindrischer Abschnitt | 21 |
| zweiter zylindrischer Abschnitt | 22 |
| | |
| (wälzgeschältes innenverzahntes) Werkstück | 30 |

(fortgesetzt)

| | |
|---|---|
| zylindrischer Innenring | 31 |
| | |
| Wälzschälwerkzeug | 10 |
| | |
| (wälzgeschältes) Werkstück | 50 |
| | |
| (wälzgeschältes) Werkstück | 60 |
| erster zylindrischer Abschnitt | 61 |
| zweiter zylindrischer Abschnitt | 62 |
| | |
| (innenverzahntes, wälzgeschältes) Werkstück | 70 |
| Innenring | 71 |
| | |
| Wälzschälwerkzeug | 100 |
| Grundkörper | 110 |
| Schneidzähne | 111 |
| Aufnahmeöffnungen | 112 |
| Stirnfläche | 113 |
| Zentralbohrung | 115 |
| Schraube | 116 |
| Durchgangslöcher | 117 |
| Messerstäbe | 120 |
| | |
| Adapter | 130 |
| | |
| kegelstumpfförmiger (konischer) Teil | 160 |
| | |
| Werkzeugspindel | 170 |
| | |
| Werkstückspindel | 180 |
| | |
| Maschine | 200 |
| CNC-Steuerung | 201 |
| kommunikationstechnische Verbindung | 202 |
| Axialvorschub | 203 |
| Bewegung des Axialvorschubs | 204 |
| Schlitten | 205 |
| Linearverschiebung | 206 |
| Drehbewegung | 207 |

| | |
|---|---|
| lineare Relativbewegung | 208 |
| | |
| Freiwinkel der Kopfschneide | $\alpha_{Ki}$ |
| konstruktiver Freiwinkel | $\alpha_{Ko}$ |
| kinematisch-konstruktiv erzielter Kopffreiwinkel | $\alpha_{KiKo}$ |
| Achsabstand | a |
| Achskreuzpunkt | AK |
| Auslegungspunkt | AP |
| Berührpunkt | BP |
| Schrägungswinkel des Werkzeugs | $\ss_1$ |
| in die Berührebene BE projiziertem Schrägungswinkel $\beta_1$ eines geneigten zylindrischen Wälzschälwerkzeugs 100 | $\tilde{\beta}_1$ |
| Schrägungswinkel des Werkstücks 50, 60, 70 | $\ss_2$ |
| Neigungswinkel | $\delta$ |
| Durchmesser des Werkstückwälzkreises | $d_{w2}$ |
| Spanflächenversatz | e |
| Fußpunkt des Gemeinlots auf der Rotationsachse R1 | GLF1 |
| Fußpunkt des Gemeinlots auf der Rotationsachse R2 | GLF2 |
| Gemeinlotvektor | GLV |
| Kollisionsbereich | KB |
| Lotfußpunkt | LF1 |
| Lotfußpunkt | LF2 |
| Konuswinkel | $\lambda$ |
| Berührebenennormale | $\vec{n}$ |
| Werkzeugdrehzahl | $n_1$ |
| Werkstückdrehzahl | $n_2$ |
| Rotationsachse des Werkzeugs (Werkzeugachse) | R1 |
| Berührradiusvektor des Werkzeugs 10 | $\vec{r}_1$ |
| Rotationsachse des Werkstücks (Werkstückachse) | R2 |
| Berührradiusvektor des Werkstücks 50, 60, 70 | $\vec{r}_2$ |
| Hubbewegung | $s_{hx}$ |
| Axialvorschub / | $s_{ax}$ |
| Differentialvorschub | $s_D$ |
| Radialvorschub | $s_{rad}$ |
| Effektiver Achskreuzwinkel | $\Sigma_{eff}$ |
| Achskreuzwinkel | $\Sigma$ |
| Betrag der Schnittgeschwindigkeit | $v_c$ |
| Schnittgeschwindigkeitsvektor | $\vec{v}_c$ |
| Betrag des Geschwindigkeitsvektors Wälzschälwerkzeug | $v_1$ |

(fortgesetzt)

| | |
|---|---|
| Geschwindigkeitsvektor Wälzschälwerkzeug | $\vec{v}_1$ |
| Betrag des Geschwindigkeitsvektors Werkstück | $v_2$ |
| Geschwindigkeitsvektor Werkstück | $\vec{v}_2$ |
| Wälzkreis | WK |
| Wälzkreis des Wälzschälwerkzeugs 100 | W1 |
| Wälzkreis des Werkstücks 50, 60, 70 | W2 |
| Rotation um die Achse R1 | $\omega_1$ |
| Rotation um die Achse R2 | $\omega_2$ |
| Zähnezahl des Wälzschälwerkzeugs 100 | $z_1$ |
| Zähnezahl des Werkstücks 50, 70 | $z_2$ |
| Achsen eines Koordinatensystems | x, y, z |

**Patentansprüche**

1. Verfahren zum Wälzschälen eines Werkstücks (50; 60; 70) mit rotationssymmetrischer, periodischer Struktur unter Einsatz eines Wälzschälwerkzeugs (100), mit den folgenden Schritten, die während des Wälzschälens ausgeführt werden:

   - gekoppeltes Ausführen einer Relativbewegung des Wälzschälwerkzeugs (100) im Bezug zu dem Werkstück (50; 60; 70),
   - Drehen des Wälzschälwerkzeugs (100) um eine erste Rotationsachse (R1) und Drehen des Werkstücks (50; 60; 70) um eine zweite Rotationsachse (R2),

   wobei während des Wälzschälens die erste Rotationsachse (R1) windschief zur zweiten Rotationsachse (R2) verläuft,
   **dadurch gekennzeichnet, dass**
   während des Wälzschälens ein positiver oder ein negativer Neigungswinkel (5) des Wälzschälwerkzeugs (100) eingestellt ist, dessen Betrag grösser gleich 15 Grad ist.

2. Verfahren nach Anspruch 1, **dadurch gekennzeichnet, dass** das gekoppelte Bewegen des Wälzschälwerkzeugs (100) und des Werkstücks (50; 60; 70) so ausgeführt wird, dass sich während des Wälzschälens eine Relativbewegung zwischen dem Wälzschälwerkzeug (100) und dem Werkstück (50; 60; 70) ergibt, die der Relativbewegung eines Schraubradgetriebes entspricht.

3. Verfahren nach Anspruch 1 oder 2, **dadurch gekennzeichnet, dass** das Wälzschälwerkzeug (100) während der Bearbeitungsphase in Richtung auf das Werkstück (50; 60; 70) hingeneigt ist, wobei der Neigungswinkel (5) vorzugsweise in einem Winkelbereich zwischen -15 Grad und -45 Grad liegt.

4. Verfahren nach Anspruch 1 oder 2, **dadurch gekennzeichnet, dass** das Wälzschälwerkzeug (100) während der Bearbeitungsphase in Richtung von dem Werkstück (50; 60; 70) weggeneigt ist, wobei der Neigungswinkel (5) vorzugsweise in einem Winkelbereich zwischen +15 Grad und +45 Grad liegt.

5. Verfahren nach Anspruch 1, 2 oder 3, **dadurch gekennzeichnet, dass** das Wälzschälwerkzeug (100) mehrere Schneidzähne (111) umfasst, wobei jeder der Schneidzähne (111) mit konstruktiven Freiwinkeln versehen ist.

6. Verfahren nach Anspruch 3, **dadurch gekennzeichnet, dass** sich ein kinematisch-konstruktiver Kopffreiwinkel ($\alpha_{KiKo}$) als Summe aus kinematisch erzeugtem negativen Freiwinkel ($\alpha_{Ki}$) und konstruktivem Werkzeugfreiwinkel ($\alpha_{Ko}$) ergibt.

7. Verfahren nach einem der vorhergehenden Ansprüche, **dadurch gekennzeichnet, dass** es sich bei der rotationssymmetrischen, periodischen Struktur um eine Innenverzahnung oder eine Aussenverzahnung des Werkstücks (50; 60; 70) handelt.

8. Verfahren nach einem der vorhergehenden Ansprüche 1 - 7, **dadurch gekennzeichnet, dass** es sich bei dem Werkstück (50; 60; 70) um ein zylindrisches Werkstück handelt und dass ein Spanflächenversatz (e) vorgegeben wird.

9. Verfahren nach einem der vorhergehenden Ansprüche 1 - 8, **dadurch gekennzeichnet, dass** es sich bei dem Werkstück (50; 60; 70) um ein Werkstück (60) handelt, das nur einen geringen Überlauf zulässt.

10. Verfahren nach einem der vorhergehenden Ansprüche 1 - 7, **dadurch gekennzeichnet, dass** es sich bei dem Werkstück (50; 60; 70) um ein Werkstück (70) mit einem Innenring (71) und bei dem Wälzschälwerkzeug (100) um einen Schälrüssel handelt, wobei der Innenring (71) ein Verhältnis von Innendurchmesser zur erforderlichen Eintauchtiefe des Schälrüssels in das Werkstück (70) aufweist, der kleiner ist als 2.

**Claims**

1. Method for power skiving of a work piece (50; 60; 70) having a rotational-symmetric, periodic structure with application of a power skiving tool (100), comprising the following steps which are performed during the proper power skiving:

   - coupledly performing a relative movement of the power skiving tool (100) in relation to the work piece (50; 60; 70),
   - rotating the power skiving tool (100) about a first rotation axis (R1) and rotating the work piece (50; 60; 70) about a second rotation axis (R2),

   wherein during the power skiving the first rotation axis (R1) runs skew with respect to the second rotation axis (R2), **characterized in that**
   a positive or a negative tilt angle (5) of the power skiving tool (100) is set during the power skiving, the absolute value of which is greater or equal to 15 degrees.

2. Method according to claim 1, **characterized in that** the coupledly moving of the power skiving tool (100) and the work piece (50; 60; 70) is performed such that during the power skiving a relative movement between the power skiving tool (100) and the work piece (50; 60; 70) results, which corresponds to the relative movement of a helical gear.

3. Method according to claim 1 or 2, **characterized in that** the power skiving tool (100) is tilted in the direction towards the work piece (50; 60; 70) during the machining phase, wherein the tilt angle (5) is preferably in an angle range between -15 degree and -45 degree.

4. Method according to claim 1 or 2, **characterized in that** the power skiving tool (100) is tilted in the direction away from the work piece (50; 60; 70) during the machining phase, wherein the tilt angle (5) is preferably in an angle range between +15 degree and +45 degree.

5. Method according to claim 1, 2 or 3, **characterized in that** the power skiving tool (100) comprises several cutting teeth (111), wherein each one of the cutting teeth (111) is provided with constructional rake angles.

6. Method according to claim 3, **characterized in that** a kinematic-constructionally head rake angle ($\alpha_{KiKo}$) results as a sum of a kinematically generated negative rake angle ($\alpha_{Ki}$) and a constructional rake angle ($\alpha_{Ko}$) of the tool.

7. Method according to any one of the preceding claims, **characterized in that** the rotational-symmetric periodic structure concerns an internal gearing or an external gearing of the work piece (50; 60; 70).

8. Method according to any one of the preceding claims 1 to 7, **characterized in that** the work piece (50; 60; 70) concerns a cylindrical work piece and that a cutting face offset (e) is provided.

9. Method according to any one of the preceding claims 1 to 8, **characterized in that** the work piece (50; 60; 70) concerns a work piece (60) which allows only a small overrun.

**10.** Method according to any one of the preceding claims 1 to 7, **characterized in that** the work piece (50; 60; 70) concerns a work piece (70) with an inner ring (71) and the power skiving tool (100) concerns a scalping nozzle, wherein the inner ring (71) has a ratio of the inner diameter and the required plunging depth of the scalping nozzle into the work piece (70), which ratio is less than 2.

**Revendications**

**1.** Procédé de taillage par développante d'une pièce (50 ; 60 ; 70) présentant une structure périodique à symétrie de rotation à l'aide d'un outil de taillage par développante (100), le procédé comprenant les étapes suivantes réalisées pendant le taillage par développante :

   - effectuer de manière couplée un mouvement relatif de l'outil de taillage par développante (100) par rapport à la pièce (50 ; 60 ; 70),
   - faire tourner l'outil de taillage par développante (100) autour d'un premier axe de rotation (R1) et faire tourner la pièce (50 ; 60 ; 70) autour d'un deuxième axe de rotation (R2),

   dans lequel, pendant le taillage par développante, le premier axe de rotation (R1) s'étend incliné par rapport au deuxième axe de rotation (R2), **caractérisé en ce que**, pendant le taillage par développante, il est réglé un angle d'inclinaison ($\delta$) positif ou négatif de l'outil de taillage par développante (100) dont la valeur est supérieure ou égale à 15 degrés.

**2.** Procédé selon la revendication 1, **caractérisé en ce que** le déplacement couplé de l'outil de taillage par développante (100) et de la pièce (50 ; 60 ; 70) est réalisé de telle façon que, pendant le taillage par développante, il en résulte un mouvement relatif entre l'outil de taillage par développante (100) et la pièce (50 ; 60 ; 70) qui correspond au moment relatif d'un engrenage hélicoïdal.

**3.** Procédé selon la revendication 1 ou 2, **caractérisé en ce que** l'outil de taillage par développante (100), pendant la phase d'usinage, est incliné en direction de la pièce (50 ; 60 ; 70), l'angle d'inclinaison ($\delta$) se situant de préférence dans une plage angulaire comprise entre - 15 degrés et - 45 degrés.

**4.** Procédé selon la revendication 1 ou 2, **caractérisé en ce que** l'outil de taillage par développante (100), pendant la phase d'usinage, est incliné en s'éloignant de la pièce (50 ; 60 ; 70), l'angle d'inclinaison ($\delta$) se situant de préférence dans une plage angulaire comprise entre + 15 degrés et + 45 degrés.

**5.** Procédé selon la revendication 1, 2 ou 3, **caractérisé en ce que** l'outil de taillage par développante (100) comprend plusieurs dents de coupe (111), chacune des dents de coupe (111) étant pourvue de dépouilles constructives.

**6.** Procédé selon la revendication 3, **caractérisé en ce qu'**il en résulte une dépouille de tête cinématico-constructive ($\alpha_{KIKO}$) comme somme de la dépouille ($\alpha_{KI}$) négative produite de manière cinématique et la dépouille d'outil constructive ($\alpha_{KO}$).

**7.** Procédé selon l'une des revendications précédentes, **caractérisé en ce que** la structure périodique à symétrie de rotation est une denture intérieure ou une denture extérieure de la pièce (50 ; 60 ; 70).

**8.** Procédé selon l'une des revendications précédentes 1 à 7, **caractérisé en ce que** la pièce (50 ; 60 ; 70) est une pièce cylindrique et **en ce qu'**il est déterminé un décalage des faces d'attaque (e).

**9.** Procédé selon l'une des revendications précédentes 1 à 8, **caractérisé en ce que** la pièce (50 ; 60 ; 70) est une pièce (60) qui permet uniquement un léger débordement.

**10.** Procédé selon l'une des revendications précédentes 1 à 7, **caractérisé en ce que** la pièce (50 ; 60 ; 70) est une pièce (70) avec une bague intérieure (71) et **en ce que** l'outil de taillage par développante (100) est une buse de taillage par développante, la bague intérieure (71) présentant un rapport entre le diamètre intérieur et la profondeur de pénétration nécessaire de la buse de taillage dans la pièce (70) inférieur à 2.

Fig. 1

**Fig. 2**

**Fig. 3**

Σ

R1

10

20

R2

AK=BP

**Fig. 4A**

R1

$\alpha_{Ko}$

20

10

BP

**Fig. 4B**

**Fig. 5**

Σ

R1

10

20

AK

R2

e

**Fig. 6A**

$\alpha_{Ki}$

R1

20

10

BP

**Fig. 6B**

**Fig. 7A**

**Fig. 7B**

**Fig. 8A**

**Fig. 8B**

R2     R1

21              10

20

22

**Fig. 9A**

R2              20

10                    21

22

R1

KB              **Fig. 9B**

R1

R2

21

20

10

22

**Fig. 10A**

R2

20

10

21

22

R1

KB

**Fig. 10B**

**Fig. 11**

**Fig. 12**

**Fig. 13**

**Fig. 14A**

**Fig. 14B**

**Fig. 14C**

**Fig. 14D**

Fig. 14E

EP 2 520 391 B1

Fig. 15A

Fig. 15B

39

**Fig. 16A**

**Fig. 16B**

**Fig. 17**

**Fig. 18A**

**Fig. 18B**

**Fig. 19**

100

111

R1

**Fig. 20**

100

111

R1

**Fig. 21A**

50

R1

100

**Fig. 21B**

R2

100

111

R1

**Fig. 22A**

R1

50

100

R2

**Fig. 22B**

200

CNC

208

201

202

204

203

R1

170

70

180

SA

207 206

R2

205

100

**Fig. 23**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 243514
- DE 102009025945 A1